# EUROPEAN PATENT SPECIFICATION

(11) **EP 4 193 214 B1**
(45) Date of publication and mention of the grant of the patent: **31.12.2025**
(21) Application number: 21756165.3
(22) Date of filing: 04.08.2021
(51) Int. Cl.: G02B 27/01

(54) **SYSTEM FOR OPTIMIZED SELECTIVE LIGHT PASS THROUGH**
SYSTEM FÜR OPTIMIERTEN SELEKTIVEN LICHTDURCHGANG
SYSTÈME DE PASSAGE DE LUMIÈRE SÉLECTIF OPTIMISÉ

(30) Priority: 04.08.2020 EP 20189308; 04.08.2020 US 202063060783 P
(43) Date of publication of application: 14.06.2023
(73) Proprietor: Dolby Laboratories Licensing Corporation, San Francisco, CA 94103 (US)
(72) Inventor: NINAN, Ajit, San Jose. CA 95123 (US); DEVINE, Titus Marc, San Francisco, California 94103 (US); WAN, Chun Chi, San Francisco, California 94103 (US)
(74) Representative: Dolby International AB Patent Group Europe
(86) International application number: PCT/US2021/044562
(87) International publication number: WO 2022/031861

(56) References cited:
- EP-A1- 3 258 305
- US-A1- 2017 219 826
- US-A1- 2018 295 351
- US-A1- 2020 103 659
- US-B1- 10 088 685

## Description

### TECHNOLOGY

The present invention relates generally to display devices, and in particular, to display devices that optimize selective light pass through.

### BACKGROUND

Content such as augmented reality (AR) or virtual reality (VR) video content may be visually presented through a wearable or non-wearable device such as a head-mounted AR or VR display device to a user. It is technically challenging to integrate various complex electronic and optoelectronic components into a display device with a small footprint, light weight and a reasonable cost. The display device also needs to perform well in processing image data and rendering AR or VR video content derived from the image data at runtime. Given these technical constraints and challenges, many display devices suffer from image quality problems such as lacking vividness and contrasts in AR or VR video content rendered by the display devices. In addition, (e.g., see-through, etc.) visual content other than the AR or VR content - as concurrently conveyed to users' vision fields through the display devices - may also be obscured and degraded to some extent by the rendered AR or VR video content.

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section. Similarly, issues identified with respect to one or more approaches should not assume to have been recognized in any prior art on the basis of this section, unless otherwise indicated.

US 2018/295351 A1 seems to generally disclose a wearable device that comprises a left view optical stack for a viewer to view left view cinema display images rendered on a cinema display and a right view optical stack for the viewer to view right view cinema display images rendered on the cinema display. The left view cinema display images and the right view cinema display images form stereoscopic cinema images. The wearable device further comprises a left view imager that renders left view device display images, to the viewer, on a device display, and a right view imager that renders right view device display images, to the viewer, on the device display. The left view device display images and the right view device display images form stereoscopic device images complementary to the stereoscopic cinema images.

US 2017/219826 A1 seems to generally disclose an AR-capable display device for displaying light generated by a display onto a predefined field of view. Within one implementation, the display device comprises a mount assembly configured to removably attach with a mobile computing device associated with the display, to thereby arrange the display with a predefined position. The display device further comprises an optical arrangement having a predefined arrangement relative to the predefined position and defining the field of view. The optical arrangement comprises a first mirror element configured to reflect a first portion of first incident light that is based on the light generated by the display, and a second mirror element disposed within the field of view and configured to reflect, onto the field of view, a second portion of second incident light that is based on the first portion.

US 2020/103659 A1 seems to generally disclose a viewing device that includes a projector that projects a first imaged light, and a polarizing beam splitter plate that receives the projected first imaged light from the projector and reflects the received first imaged light for viewing by a viewer. The polarizing beam splitter plate also receives a second image and transmits the second image for viewing by the viewer. The polarizing beam splitter plate includes a substrate and a multilayer optical film reflective polarizer that is adhered to the substrate. The reflective polarizer substantially reflects polarized light having a first polarization state and substantially transmits polarized light having a second polarization state perpendicular to the first polarization state. The polarizing beam splitter plate includes a first outermost major surface and an opposing second outermost major surface that makes an angle of less than about 20 degrees with the first outermost major surface. The polarizing beam splitter plate reflects the received first imaged light towards the viewer with the reflected first imaged light having an effective pixel resolution of less than 12 microns.

US 10 088 685 B1 seems to generally disclose a wearable, augmented or virtual reality display system including two or more sets of backlight illumination arrangements. Each different set of backlight illumination is directed to a corresponding optical imaging system. The corresponding optical imaging system is designed to focus each set of illumination at a different distance. The selection of a particular optical focal distance is controlled by selecting the set of backlight illumination corresponding to the imaging system to provide the desired focal distance. As a result, selection of the backlight illumination determines at which distance an image is perceived by a user. When multiple backlight illumination sets are multiplexed with 2-D images, a single, 3-D image is perceived by the wearer of the display system.

EP 3 258 305 A1 seems to generally disclose a laser projection arrangement and a process for the generation of virtual images, the purpose of which is to present a solution which allows a representation of multiple virtual images in different distances or planes and different points of view and that can be manufactured economically. On the arrangement side, this purpose is solved when one of at least two picture generating units that generate virtual images that differ in their wavelength and/or their polarization is arranged and when a holographic optical element is arranged on or in the projection surface. On the process side, the purpose is solved when two virtual images with different wavelengths and/or different polarizations are generated, when a holographic optical element is provided which exhibits different optical properties for different wavelengths and/or different polarizations, and when, in the case of projection of the virtual images while making use of the holographic optical element, the virtual images are represented, due to the different optical properties, at different distances from the driver and/or in different points of view from the driver.

### BRIEF DESCRIPTION OF DRAWINGS

The present invention is illustrated by way of example, and not by way of limitation, in the figures of the accompanying drawings and in which like reference numerals refer to similar elements and in which:
FIG. 1A illustrates an example system configuration for optimizing a viewer's reception of external display light and device display light;
FIG. 1B through FIG. 1O illustrate example optical configurations implemented in wearable or non-wearable devices, transmittances and reflectances associated with the optical configurations, and observer received intensities;
FIG. 2A through FIG. 2G illustrate example device image displays;
FIG. 3A illustrates an example augmented entertainment system configuration; FIG. 3B illustrates example display operations; FIG. 3C illustrates an example system for multiple layer light modulation; FIG. 3D illustrates an example light source element;
FIG. 4 illustrates an example process flow; and
FIG. 5 illustrates an example hardware platform on which a computer or a computing device as described herein may be implemented.

### SUMMARY

The invention is defined in the appended claims.

### DESCRIPTION OF EXAMPLE EMBODIMENTS

Example embodiments, which relate to wearable or non-wearable devices that optimize selective light pass through, are described herein. In the following description, for the purposes of explanation, numerous specific details are set forth in order to provide a thorough understanding of the present invention. It will be apparent, however, that the present invention may be practiced without these specific details. In other instances, well-known structures and devices are not described in exhaustive detail, in order to avoid unnecessarily occluding, obscuring, or obfuscating the present invention.

Example embodiments are described herein according to the following outline:
1. GENERAL OVERVIEW
2. EXTERNAL AND DEVICE IMAGE DISPLAYS
3. MULTIPLEXING WITH NON-OVERLAPPING TRIBANDS
4. MULTIPLEXING WITH OVERLAPPING TRIBANDS
5. MULTIPLEXING WITH COMBINER AND BEAMSPLITTER
6. POLARIZATION-BASED MULTIPLEXING
7. DEVICE IMAGE DISPLAYS
8. AUGMENTED ENTERTAINMENT SYSTEM
9. MULTIPLE MODULATION LAYERS IN IMAGE DISPLAY
10. EXAMPLE PROCESS FLOWS
11. IMPLEMENTATION MECHANISMS - HARDWARE OVERVIEW
12. EQUIVALENTS, EXTENSIONS, ALTERNATIVES AND MISCELLANEOUS

### 1. GENERAL OVERVIEW

This overview presents a basic description of some aspects of an example embodiment of the present invention. It should be noted that this overview is not an extensive or exhaustive summary of aspects of the example embodiment. Moreover, it should be noted that this overview is not intended to be understood as identifying any particularly significant aspects or elements of the example embodiment, nor as delineating any scope of the example embodiment in particular, nor the invention in general. This overview merely presents some concepts that relate to the example embodiment in a condensed and simplified format, and should be understood as merely a conceptual prelude to a more detailed description of example embodiments that follows below. Note that, although separate embodiments are discussed herein, any combination of embodiments and/or partial embodiments discussed herein may be combined to form further embodiments. In particular, embodiments of the present invention are defined by the independent claims. Additional features of embodiments of the invention are presented in the dependent claims.

Examples described herein relate to wearable or non-wearable display devices used with an augmented entertainment system. A display device comprises: a device image display that outputs device display light rendering device display images; an optical configuration for a viewer of the display device to view external display images rendered with external display light from an external image display and the device display images rendered with the device display light from the device image display. The external display light is of a first light property. The device display light is of a second light property different from the first light property. The display device further comprises a display light combiner implemented as a part of the optical configuration to combine the external display light of the first light property and the device display light of the second light property to reach the viewer's vision field. The display light combiner causes the optical configuration to selectively reflect, based on the second light property, the device display light toward the viewer's vision field and to selectively transmit, based on the first light property, the external display light toward the viewer's vision field.

Examples described herein relate to rendering images in an augmented entertainment system. Display light rendering device display images is outputted with a device image display device of a wearable or non-wearable computing device. A viewer of the computing device is enabled through an optical configuration of the computing device to view external display images rendered with external display light from an external image display and the device display images rendered with the device display light from the device image display. The external display light is of a first light property, whereas the device display light is of a second light property different from the first light property. The external display light of the first light property and the device display light of the second light property are combined with a display light combiner implemented as a part of the optical configuration of the computing device to reach the viewer's vision field. The display light combiner causes the optical configuration of the computing device to selectively reflect, based on the second light property, the device display light toward the viewer's vision field and to selectively transmit, based on the first light property, the external display light toward the viewer's vision field.

**In** some example, mechanisms as described herein form a part of a media processing system, including but not limited to any of: cloud-based server, mobile device, virtual reality system, augmented reality system, head up display device, helmet mounted display device, CAVE-type system, wall-sized display, video game device, display device, media player, media server, media production system, camera systems, home-based systems, communication devices, video processing system, video codec system, studio system, streaming server, cloud-based content service system, a handheld device, game machine, television, cinema display, laptop computer, netbook computer, tablet computer, cellular radiotelephone, electronic book reader, point of sale terminal, desktop computer, computer workstation, computer server, computer kiosk, or various other kinds of terminals and media processing units.

Various modifications to the preferred embodiments and the generic principles and features described herein will be readily apparent to those skilled in the art.

### 2. EXTERNAL AND DEVICE IMAGE DISPLAYS

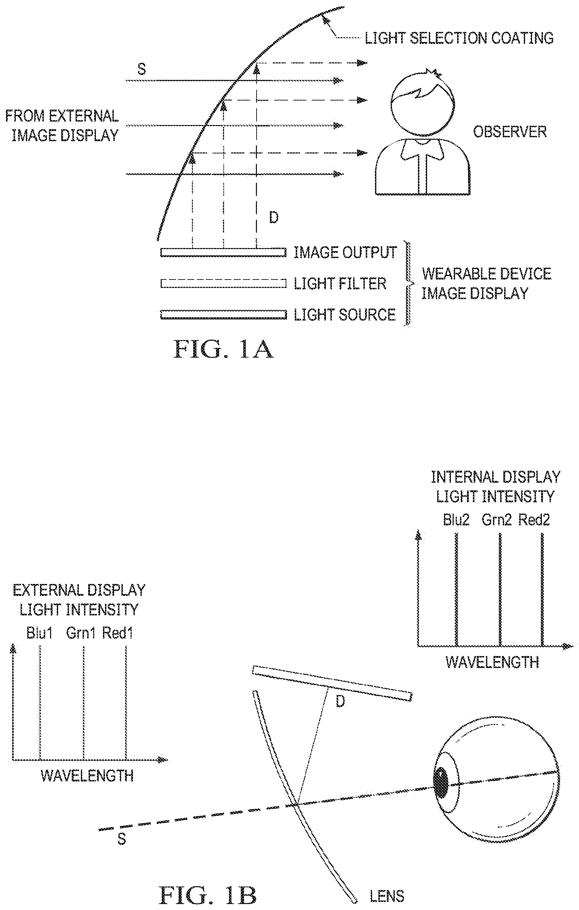

FIG. 1A illustrates an example system configuration for optimizing a viewer's reception of external display light (denoted as "S") from an external image display (e.g., a cinema display, a projection screen, a home entertainment system display, a television, etc.) and device display light (denoted as "D") from a wearable or non-wearable device image display (e.g., augmented layer light source, AR image display, VR image display, etc.).

The device image display operates with, and/or is a part of, a wearable or non-wearable computing device of a viewer (denoted as "observer") to allow the viewer to view device display images rendered with the device display light reaching the viewer's vision field (e.g., retina, foveal vision, peripheral vision, etc.). The external image display is external to, and/or outside of, a wearable or non-wearable computing device with the device image display and allows the viewer to view external display images rendered with the external display light reaching the viewer's vision field.

The external display light from the external image display is of a first light property profile, whereas the device display light from the device image display is a second light property profile that is different from the first light property profile. A light property profile as described herein may refer to a unique combination of one or more light properties such as one or more of: specific polarization states (e.g., linear polarization, circular polarization, mixed polarization, unpolarized, etc.), specific spectral properties (e.g., specific wavelengths, specific wavelength ranges, etc.), and so on. The first and second light property profiles differ in at least some light properties included or represented in the light property profiles.

Under techniques as described herein, the wearable or non-wearable computing device includes a display light combiner (represented by a curved line in FIG. 1A) used to combine the external display light from the external image display with the device display light from the device image display. More specifically, the display light combiner allows the external display light from the external image display to be transmitted (or passed) through to the viewer's vision field. At the same time, the display light combiner allows the device display light from the device image display to be reflected (or passed) through to the viewer's vision field.

The display light combiner incorporates a light selection layer (e.g., a light selection coating on an optical elements such as a lens, an optical element or a lens directly acting as a light selection layer, etc.) to enhance transmission of the external display light through the display light combiner and enhance reflection of the device display light incident onto and reflected from the display light combiner. The light selection layer can be specifically designed or selected to maximize transmission of light of the first light property profile associated with the external display light, while concurrently maximizing reflection of light of the second light property profile associated with the device display light.

Example light selection layers may include, but are not necessarily limited to only, one or more of: light selection optical elements or lenses, light selection coatings coated with optical elements or lenses, and so on. Example light selection coatings may include, but are not necessarily limited to only, one or more of: a wavelength-based light selection coating or a wavelength selection coating, a polarization-based light selection coating or a polarization selection coating, a combined wavelength-based-and-polarization-based light selection coating or a wavelength-and-polarization selection coating, and so forth.

In various embodiments, a light selection coating as described herein may be implemented with one or more of: a dichroic coating, an electrically controllable waveplate or retarder, an electrically controllable polarizer, a passive waveplate or retarder, a passive polarizer, a passive dichroic optical layer, an optical thin film, an optical membrane, an active optical component, a passive optical component, etc. In an example, a light selection coating may include a dichroic thin film coated on (one or both surfaces) of the display light combiner. In another example, a light selection coating may include a waveplate or retarder thin film coated on (one or both surfaces) of the display light combiner. In a further example, a light selection coating may include a combination of a waveplate or retarder thin film and a dichroic thin film both of which are coated on (one or both surfaces) of the display light combiner.

As illustrated in FIG. 1A, the device image display comprises multiple layers or components. These layers or components include a light source (e.g., a backlight unit, etc.), a light filter (e.g., a dichroic coated filter or a dichroic filter, etc.), an image output (e.g., a virtual display panel, a physical display panel, a holographic display, etc.), and so on.

The light filter in the device image display is used to filter an (incoming light) spectrum of incoming source light (e.g., backlight, etc.) to generate an (outgoing light) spectrum of outgoing filtered light that is to be further modulated by the image output into the device display light rendering the device display images. Additionally, optionally or alternatively, the light filter operates with the light source and/or other optical components (e.g., light absorbing or reflective layers behind, near or adjacent to the light source, light enhancement films, etc.) to absorb, recycle, enhance and/or maximize the intensity of the outgoing filtered light.

Light filtering as performed by the light filter of the device image display can eliminate ghosting that could otherwise be caused by multiple light reflections on surfaces (each of which represent an optical medium or refractive index change prone to causing reflection) of the display light combiner.

According to the invention, the external display light is of a first set of wavelengths in accordance with the first light property profile, whereas the device display light is of a second set of wavelengths in accordance with the second light property profile. The first set of wavelengths is non-overlapping or mutually exclusive with the second set of wavelengths.

While the light selection layer can be provisioned to (e.g., totally, over 90%, etc.) reflect the second set of wavelengths in accordance with the second light property profile, the light selection layer may allow transmission of light of other wavelengths other than the second set of wavelengths.

When the spectrum of the incoming source light (e.g., backlight, etc.) from the light source in the absence of light filtering comprise other wavelengths outside of the second set of wavelengths, the incoming source light portion with these other wavelengths may be first transmitted through an interior surface (which faces a viewer, a viewer of the wearable or non-wearable device image display, an observer, etc.) of the display light combiner, then reflected by an exterior surface (which faces the external image display) of the display light combiner, and finally transmitted through the interior surface of the display light combiner toward the viewer.

This incoming source light portion with the other wavelengths reaches the viewer's vision field, as the incoming source light portion with the second set of wavelengths directly reflected from the interior surface of the display light combiner also reaches the viewer's vision field, thereby causing ghosting in the viewer's vision field.

In contrast, under techniques as described herein, with the light filtering performed by the light filter in the device image display, the outgoing filtered light from the image output is of the second light property profile such that the light selection layer is specifically designed to efficiently (e.g., totally, over 90%, etc.) reflect. Light with light properties other than those of the second light property profile, which would not be blocked from transmission by the light selection layer, is filtered out and removed from being a part of the filtered light from the image output.

For example, even when the spectrum of the incoming source light (e.g., backlight, etc.) from the light source comprise other wavelengths outside of the second set of wavelengths, the incoming source light portion with these other wavelengths is filtered out from the outgoing filtered light and thus is prevented from being transmitted through the interior surface of the display light combiner.

As a result of removing light of the light properties other than those in the second light property profile, ghost reflections of the device display images can be prevented or eliminated.

**In** a non-limiting implementation example, a light selection coating disposed on the interior surface of the display light combiner (e.g., a lens, etc.) may be a first dichroic thin film coated on the interior surface of the display light combiner. The light filter disposed in between the light source and the image output in the device image display may be a second dichroic thin film that filters the incoming source light to generate the outgoing filtered light of the second set of wavelengths in accordance with the second light property profile. The first dichroic thin film efficiently (e.g., totally, over 90%, over 99%, etc.) reflects the device display light of the second set of wavelengths and efficiently (e.g., totally, over 90%, over 99%, etc.) transmits light of other (visible) wavelengths or wavelength ranges including the external image display light of the first set of wavelengths from the external image display.

As the other (visible) wavelengths are filtered out or removed by the light filter from the outgoing filtered light, the outgoing filtered light comprises (e.g., only, over 90%, over 99%, etc.) light of the second set of wavelengths. After the outgoing filtered light is modulated by the image output into the device display light, the device display light still comprises light of the second set of wavelengths. At the same time, no light of other wavelength is present in the outgoing filtered light or the device display light as modulated from the outgoing filtered light.

As a result, the device display light incidents on the display light combiner is efficiently (e.g., totally, over 90%, over 99%, etc.) reflected by the first dichroic thin film disposed on the interior surface of the display light combiner. At the same time, no or little light is transmitted through the first dichroic thin film on the interior surface of the display light combiner, reflected back from the exterior surface of the display light combiner; no or little light is transmitted through the interior surface of the display light combiner towards the viewer. Thus, image ghosting can be eliminated or prevented in the viewer's vision field.

A resultant combined light spectrum at the observer includes (1) the external display light of the first light property profile from the external image display, which transmits through the display light combiner with the light selection coating with a relatively high transmission efficiency (e.g., high transmittance, high transmissivity, etc.), and (2) the device display light of the second light property profile from the device image display, which reflects from the display light combiner with the light selection coating with a relatively high reflection efficiency (e.g., high reflectance, high reflectivity, etc.).

This enables or preserves a relatively high (original) intensity of light from each of the external image display and the device image display to reach the viewer. As the relatively high (e.g., most if not all original, etc.) intensities of light from these separate displays are allowed to reach the viewer, these (e.g., most if not all original, etc.) intensities can be (e.g., effectively, programmatically, collaboratively, etc.) controlled to enable or effectuate intensity and/or color matching between or among respective light from the separate image displays. Additionally, optionally or alternatively, powers needed to drive each of the external or device image displays for the purposes of producing intensity and/or color matching can be significantly lowered.

Light selection (e.g., spectral separation, spectrally selective reflection and transmission, etc.) implemented under techniques as described herein between the external image display and the display image display enables a relatively clear separation (e.g., clean color, clean spectral separation, clean polarization separation, etc.) of respective light from the external and device image displays. This separation allows the external and device image displays to occlude or superimpose each other as needed for creating independent or dependent image layers during image display operations.

An external image display as described herein may be provided with an external display system. The external display system may comprise one or more of: image/video projector and projection screen, video wall, TV, monitor, laptop screen, mobile phone screen, cinema laser projector and projection screen, etc.

A wearable or non-wearable computing device as described herein may, but is not limited to, be a head-mounted AR display with AR optics and electronics, a head-mounted VR display with VR optics and electronics, a 3D glasses with imagers, etc.

In some operational scenarios, one or both of the external display system and the wearable or non-wearable computing device may operate with a system (e.g., e.g., on the wearable device, with the external display system, etc.) tracking relative views of the external display images rendered with the external image display as seen by the viewer (or the device user) and processing and updating imagery to be rendered with the external image display and/or imagery to be rendered with the wearable or non-wearable computing device (e.g., a head-mounted AR display system, etc.).

Efficient optical configurations may be implemented in one or both of the external display system and the wearable or non-wearable computing device to perform spectral and/or polarization multiplexing. One or both of the external display system and the wearable or non-wearable computing device can perform specific video/image processing operations to enhance color accuracy, dynamic range, color range or gamut, etc. Additionally, optionally or alternatively, system configuration may be implemented and specific video/image generation and/or processing operations may be performed, by one or both of the external display system and the wearable or non-wearable computing device, to support multi-user experience with simultaneous multiplexing of multiple users (e.g., in a cinema, in a movie theater, etc.) with and without wearable or non-wearable computing device(s).

### 3. MULTIPLEXING WITH NON-OVERLAPPING TRIBANDS

FIG. 1B illustrates an example single-element optical configuration implemented in a wearable or non-wearable computing device to perform spectral multiplexing.

The single-element optical configuration of the computing device comprises a display light combiner (e.g., a lens in an eyeglass frame, etc.) that implements or performs the spectral multiplexing by combining external display light ("S") (e.g., projector light incident on and reflected from an external projection screen, direct light emitted from an external screen, etc.) from an external image display and device display light ("D") such as modulated light emitted from a wearable or non-wearable device image display into a viewer's observer received light. Example configurations for the display light combiner may include, but are not necessarily limited to only, one or more of: broadband or wideband beamsplitter/reflector, spectral beamsplitter/reflector, and so on.

The external display light ("S") is of first wavelengths or first spectral emission in a first set of wavelengths referred to herein as "S_screen". The first set of wavelengths associated with the external display light from the external image display may be represented as a first (e.g., RGB, etc.) triband comprising three first (e.g., relatively narrow, a few nanometer wide, a few tens of nanometers wide, etc.) wavelength bands (denoted as "Blu1", "Grn1" and "Red1" respectively) with their intensities depicted as heights in "external display light intensity" of FIG. 1B. The three first wavelength bands in the first triband have their respective (e.g., maximum, peak, actual, pixel-value-based, etc.) incoming light intensities, for example depending on display capabilities of the external image display, image data used to drive the external image display, etc.

The device display light ("D") is of second wavelengths or second spectral emission in a second set of wavelengths referred to herein as "S_display". The second set of wavelengths associated with the device display light from the device image display may be represented as a second (e.g., RGB, etc.) triband comprising three second (e.g., relatively narrow, a few nanometer wide, a few tens of nanometers wide, etc.) wavelength bands (denoted as "Blu2", "Grn2" and "Red2" respectively) with their intensities depicted as heights in "device display light intensity" of FIG. 1B. The three second wavelength bands in the second triband have their respective (e.g., maximum, peak, actual, pixel-value-based, etc.) incoming light intensities, for example depending on display capabilities of the device image display, image data used to drive the device image display, etc.

The first triband of the external display light has no overlapping with the second triband of the device display light. Each wavelength band (e.g., "Blu1", etc.) in the first triband may be spectrally separated by a wavelength difference or offset from a respective wavelength band (e.g., "Blu2", etc.) in the second triband.

The display light combiner provides or acts as a transmissive medium through which the external display light ("S") transmits through to reach, or to be received in, the viewer's vision field with an applicable transmission efficiency. At the same time, the display light combiner provides or acts as a beamsplitter or reflector (e.g., representing a lens, representing a lens with an additional coating/layer, etc.) with which the device display light ("D") is split or (e.g., partially, fully, etc.) reflected to reach, or to be received in, the viewer's vision field with an applicable reflection efficiency.

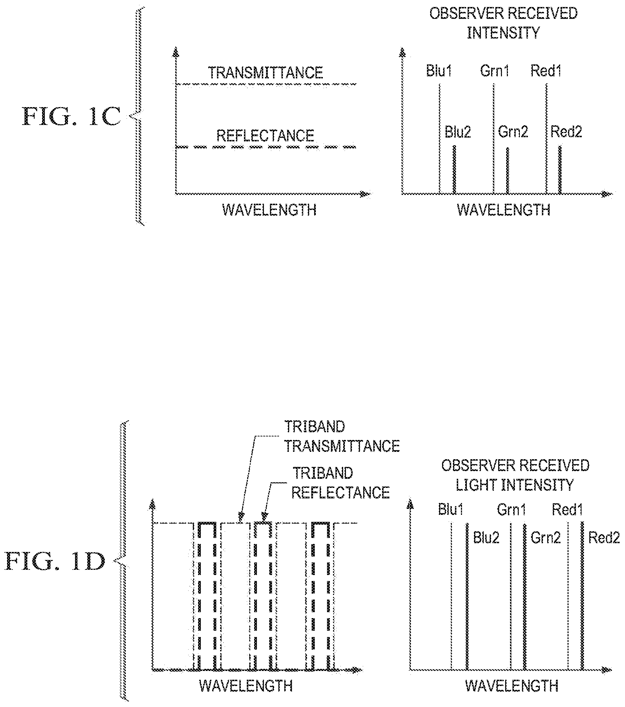

FIG. 1C illustrates example transmittance and reflectance of a single-element optical configuration (e.g., as depicted in FIG. 1B, etc.) and observer received intensity of a combination of external display light transmitted through the single-element optical configuration and device display light reflected or beamsplit with the single-element optical configuration.

For the purpose of illustration, the transmittance and the reflectance of FIG. 1C are depicted as constant across a broad spectrum (e.g. entire visible spectrum, etc.). However, it should be noted that, in various embodiments, one or both of the transmittance and reflectance may or may not be constant across the broad spectrum.

The combination of the external display light and the device display light reaching the viewer's vision field by way of the display light combiner in the single-element optical configuration of the wearable or non-wearable computing device comprises transmitted external display light of each wavelength band in the first triband at a respective observer received intensity (e.g., "Blu1", "Grn1" and "Red1" in FIG. 1C, etc.). The respective observer received intensity for each such wavelength band in the first triband is a corresponding incoming light intensity (as illustrated in FIG. 1B) of the external display light ("S") in the wavelength band multiplied with a corresponding transmittance (as illustrated in FIG. 1C) representing an applicable transmission efficiency of the single-element optical configuration for the wavelength band in the first triband.

At the same time, the combination of the external display light and the device display light reaching the viewer's vision field comprises reflected or beamsplit device display light of each wavelength band in the second triband at an observer received intensity (e.g., "Blu2", "Grn2" and "Red2" in FIG. 1C, etc.). The respective observer received intensity for each such wavelength band in the second triband is a corresponding incoming light intensity (as illustrated in FIG. 1B) of the device display light ("D") in the wavelength band multiplied with a corresponding reflectance (as illustrated in FIG. 1C) representing an applicable reflection efficiency of the single-element optical configuration for the wavelength band in the second triband.

FIG. 1D illustrates example transmittance and reflectance of a single-element optical configuration (e.g., as depicted in FIG. 1B, etc.) and observer received intensity of a combination of external display light transmitted through the single-element optical configuration and device display light reflected or beamsplit with the single-element optical configuration.

In some operational scenarios, the single-element optical configuration of the wearable or non-wearable computing device comprises a light selection layer implemented with a light selection coating in the form of a triband dichroic filter coating disposed in an interior surface of a display light combiner in the single-element optical configuration. The transmittance and reflectance of FIG. 1D represent transmission and reflection efficiencies of the triband dichroic filter coating, respectively.

As illustrated, the triband dichroic filter coating provides triband transmissions with a relatively high transmission efficiency for light with wavelengths in the first triband such as the external display light S_screen and triband reflections with a relatively high reflection efficiency for light with wavelengths in the second triband such as the device display light S_display. Complementarily, the triband dichroic filter coating rejects with a relatively low reflection efficiency for reflection of light with wavelengths in the first triband and rejects with a relatively low transmission efficiency for transmission of light with wavelengths in the second triband.

The combination of the external display light and the device display light reaching the viewer's vision field by way of the display light combiner incorporating the triband dichroic filtering coating comprises transmitted external display light of each wavelength band in the first triband at a respective observer received intensity (e.g., "Blu1", "Grn1" and "Red1" in FIG. 1D, etc.). The respective observer received intensity for each such wavelength band in the first triband is a corresponding incoming light intensity (as illustrated in FIG. 1B) of the external display light ("S") in the wavelength band multiplied with a corresponding triband transmittance (as illustrated in FIG. 1D) representing an applicable transmission efficiency of the single-element optical configuration for the wavelength band in the first triband.

At the same time, the combination of the external display light and the device display light reaching the viewer's vision field comprises reflected or beamsplit device display light of each wavelength band in the second triband at an observer received intensity (e.g., "Blu2", "Grn2" and "Red2" in FIG. 1D, etc.). The respective observer received intensity for each such wavelength band in the second triband is a corresponding incoming light intensity (as illustrated in FIG. 1B) of the device display light ("D") in the wavelength band multiplied with a corresponding triband reflectance (as illustrated in FIG. 1D) representing an applicable reflection efficiency of the single-element optical configuration for the wavelength band in the second triband.

### 4. MULTIPLEXING WITH OVERLAPPING TRIBANDS

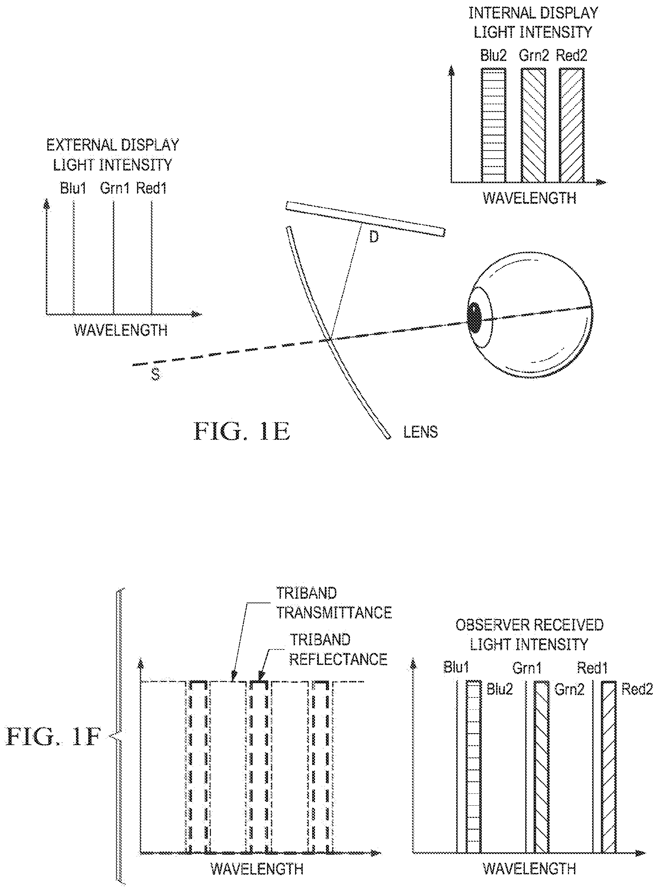

FIG. 1E illustrates an example single-element optical configuration, which is not according to the claimed subject-matter, implemented in a wearable or non-wearable computing device to perform spectral multiplexing.

The single-element optical configuration of the computing device comprises a display light combiner (e.g., a lens in an eyeglass frame, etc.) that implements or performs the spectral multiplexing by combining external display light ("S") (e.g., projector light incident on and reflected from an external projection screen, direct light emitted from an external screen, etc.) from an external image display and device display light ("D") such as modulated light emitted from a wearable or non-wearable device image display into a viewer's observer received light. Example configurations for the display light combiner may include, but are not necessarily limited to only, a combination of one or more of: lens and spectral beamsplitter/reflector, and so on.

The external display light ("S") may be of first wavelengths or first spectral emission in a first set of wavelengths referred to herein as "S_screen1". The first set of wavelengths associated with the external display light from the external image display may be represented as a first (e.g., RGB, etc.) triband comprising three first (e.g., relatively narrow, a few nanometer wide, a few tens of nanometers wide, etc.) wavelength bands (denoted as "Blu1", "Grn1" and "Red1" respectively) with their intensities depicted as heights in "external display light intensity" of FIG. 1E. The three first wavelength bands in the first triband have their respective (e.g., maximum, peak, actual, pixel-value-based, etc.) incoming light intensities, for example depending on display capabilities of the external image display, image data used to drive the external image display, etc.

The device display light ("D") may be of second wavelengths or second spectral emission in a second set of wavelengths referred to herein as "S_display1". The second set of wavelengths associated with the device display light from the device image display may be represented as a second (e.g., RGB, etc.) triband comprising three second (e.g., relatively wide, etc.) wavelength bands (denoted as "Blu2", "Grn2" and "Red2" respectively) with their intensities depicted as height times width in "device display light intensity" of FIG. 1E. The three second wavelength bands in the second triband have their respective (e.g., maximum, peak, actual, pixel-value-based, etc.) incoming light intensities, for example depending on display capabilities of the device image display, image data used to drive the device image display, etc.

The first triband of the external display light may be partly overlapping with the second triband of the device display light.

The display light combiner provides or acts as a transmissive medium through which the external display light ("S") transmits through to reach, or to be received in, the viewer's vision field with an applicable transmission efficiency. At the same time, the display light combiner provides or acts as a beamsplitter or reflector (e.g., representing a lens, representing a lens with an additional coating/layer, etc.) with which the device display light ("D") is split or (e.g., partially, fully, etc.) reflected to reach, or to be received in, the viewer's vision field with an applicable reflection efficiency.

FIG. 1F illustrates example transmittance and reflectance of a single-element optical configuration (e.g., as depicted in FIG. 1E, etc.) and observer received intensity of a combination of external display light transmitted through the single-element optical configuration and device display light reflected or beamsplit with the single-element optical configuration.

The single-element optical configuration of the computing device comprises a light selection layer implemented with a light selection coating in the form of a triband dichroic filter coating disposed in an interior surface of a display light combiner in the single-element optical configuration. The transmittance and reflectance of FIG. 1F represent transmission and reflection efficiencies of the triband dichroic filter coating, respectively.

As illustrated, the triband dichroic filter coating provides triband transmissions with a relatively high transmission efficiency for light with wavelengths outside of a (proper) subset of wavelengths in the second triband. The wavelengths having the relatively high transmission efficiency include the first triband such as the external display light S_screen1 as well as the second triband exclusive of the subset of wavelengths. Complementarily, the triband dichroic filter rejects with a relatively low reflection efficiency for reflection of light with these wavelengths having the relatively high transmission efficiency.

At the same time, the triband dichroic filter coating provides triband reflections with a relatively high reflection efficiency for light with wavelengths in the subset of wavelengths in the second triband such as the device display light S_display1. Complementarily, the triband dichroic filter coating rejects with a relatively low transmission efficiency for transmission of light with wavelengths in the subset of wavelengths in the second triband.

The combination of the external display light and the device display light reaching the viewer's vision field by way of the display light combiner incorporating the triband dichroic filtering coating comprises transmitted external display light of each wavelength band in the first triband at a respective observer received intensity (e.g., "Blu1", "Grn1" and "Red1" in FIG. 1F, etc.). The respective observer received intensity for each such wavelength band in the first triband is a corresponding incoming light intensity (as illustrated in FIG. 1E) of the external display light ("S") in the wavelength band multiplied with a corresponding triband transmittance (as illustrated in FIG. 1F) representing an applicable transmission efficiency of the single-element optical configuration for the wavelength band in the first triband.

At the same time, the combination of the external display light and the device display light reaching the viewer's vision field comprises reflected or beamsplit device display light of each wavelength subband in the subset of wavelengths in the second triband at an observer received intensity (e.g., "Blu2", "Grn2" and "Red2" in FIG. 1F, etc.). The respective observer received intensity for each such wavelength subband in the subset of wavelengths in the second triband is a corresponding incoming light intensity (height of FIG. 1E times width of FIG. 1E for the wavelength band in the second triband of the device display light S_display1) of the device display light ("D") in the wavelength band multiplied with a corresponding triband reflectance (as limited or represented by height of triband reflectance of FIG. 1F and width of triband reflectance of FIG. 1F) representing an applicable reflection efficiency of the single-element optical configuration for the wavelength subband in the second triband. The device display light S_display1 comprises other light of other wavelengths outside the subset of wavelengths or subbands in the second triband. Such other light is rejected, absorbed, and/or transmitted out of the single-element optical configuration. Hence such other light in the device display light S_display1 is not reflected by the single-element optical configuration into the viewer's vision field or the dichroic filtering coating thereon.

### 5. MULTIPLEXING WITH COMBINER AND BEAMSPLITTER

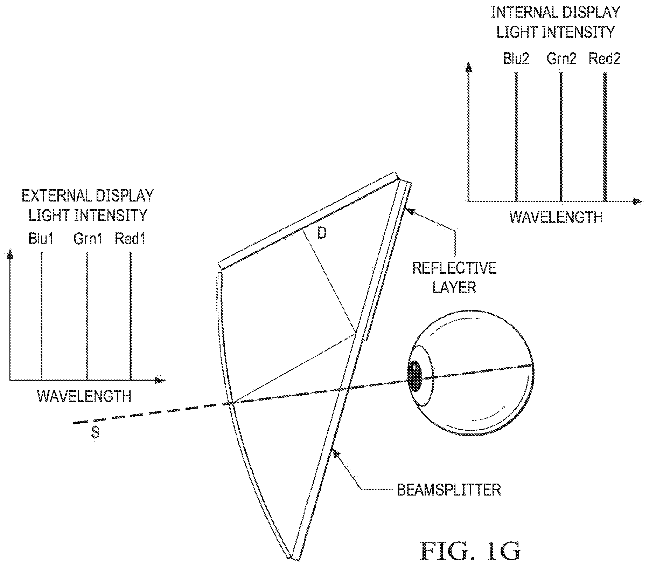

FIG. 1G illustrates an example two-element optical configuration implemented in a wearable or non-wearable computing device to perform spectral multiplexing. The two-element optical configuration of the computing device comprises a display light combiner (e.g., a lens in an eyeglass frame, etc.) and a beamsplitter.

Device display light ("D") such as modulated light from a wearable or non-wearable device image display is directed to by the beamsplitter and (e.g., partially, fully, etc.) redirected toward the display light combiner. In some operational scenarios, a (e.g., metallic, non-metallic, etc.) reflective layer may be disposed (e.g., on a surface, etc.) behind a portion of the beamsplitter. The reflective layer behind the portion of the beamsplitter reflects the device display light ("D") with a relatively high reflection efficiency to reach the display light combiner and prevents the device display light ("D") with a relatively low transmission efficiency from being transmitted directly toward the viewer's vision field. Additionally, optionally or alternatively, instead of, and/or in addition to, the reflective layer, a light absorbing layer may be deployed behind the beamsplitter to absorb light transmitting through the beamsplitter. Example configurations for the display light combiner may include, but are not necessarily limited to only, one or more of: broadband or wideband beamsplitter/reflector, spectral beamsplitter/reflector, and so on.

External display light ("S") (e.g., projector light incident on and reflected from an external projection screen, direct light emitted from an external screen, etc.) from an external image display is directed to the display light combiner.

The external display light ("S") may be of first wavelengths or first spectral emission in a first set of wavelengths referred to herein as "S_screen". The first set of wavelengths associated with the external display light from the external image display may be represented as a first (e.g., RGB, etc.) triband comprising three first (e.g., relatively narrow, a few nanometer wide, a few tens of nanometers wide, etc.) wavelength bands (denoted as "Blu1", "Grn1" and "Red1" respectively) with their intensities depicted as heights in "external display light intensity" of FIG. 1G. The three first wavelength bands in the first triband have their respective (e.g., maximum, peak, actual, pixel-value-based, etc.) incoming light intensities, for example depending on display capabilities of the external image display, image data used to drive the external image display, etc.

The device display light ("D") may be of second wavelengths or second spectral emission in a second set of wavelengths referred to herein as "S_display". The second set of wavelengths associated with the device display light from the device image display may be represented as a second (e.g., RGB, etc.) triband comprising three second (e.g., relatively narrow, a few nanometer wide, a few tens of nanometers wide, etc.) wavelength bands (denoted as "Blu2", "Grn2" and "Red2" respectively) with their intensities depicted as heights in "device display light intensity" of FIG. 1G. The three second wavelength bands in the second triband have their respective (e.g., maximum, peak, actual, pixel-value-based, etc.) incoming light intensities, for example depending on display capabilities of the device image display, image data used to drive the device image display, etc.

The first triband of the external display light is of no overlapping with the second triband of the device display light. Each wavelength band (e.g., "Blu1", etc.) in the first triband may be spectrally separated by a wavelength difference or offset from a respective wavelength band (e.g., "Blu2", etc.) in the second triband.

The display light combiner implements or performs the spectral multiplexing by combining the external display light ("S") and the device display light ("D"). The display light combiner provides or acts as a transmissive medium through which the external display light ("S") transmits through with an applicable transmission efficiency toward the viewer's vision field and incidents on the beamsplitter. At the same time, the display light combiner provides or acts as a beamsplitter or reflector (e.g., representing a lens, representing a lens with an additional coating/layer, etc.) with which the device display light ("D") is split or (e.g., partially, fully, etc.) reflected with an applicable reflection efficiency toward the viewer's vision field and incidents on the beamsplitter.

The external display light ("S") and the device display light ("D") as combined by the display light combiner and as received by the beamsplitter is beamsplit or transmitted with an applicable transmission efficiency to reach, or to be received in, the viewer's vision field.

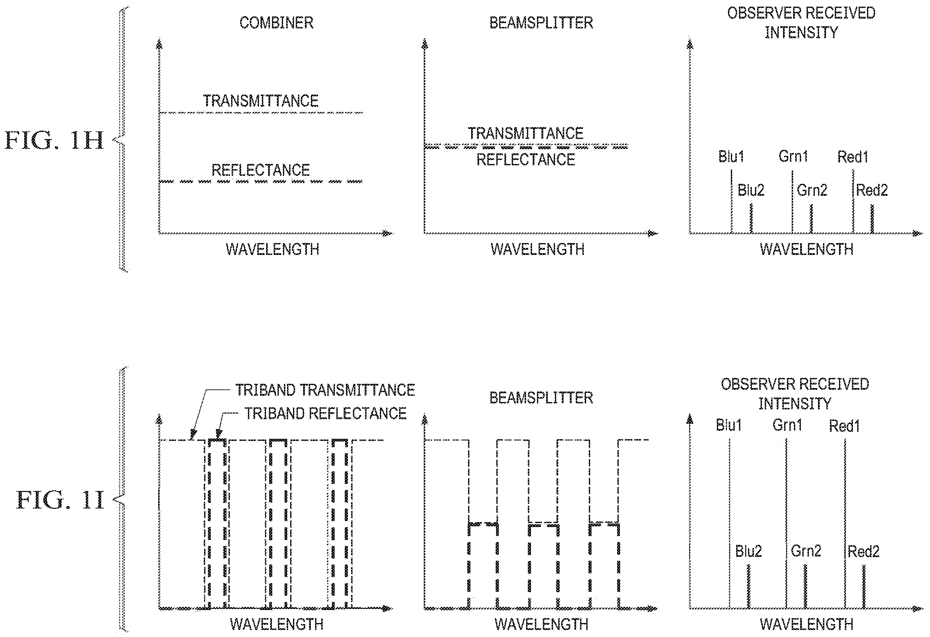

FIG. 1H illustrates example transmittances and reflectances of a display light combiner and a beamsplitter in a two-element optical configuration (e.g., as depicted in FIG. 1G, etc.) and observer received intensity of a combination of external display light transmitted and beamsplit through the two-element optical configuration and device display light reflected and beamsplit with the two-element optical configuration.

For the purpose of illustration, the transmittances and the reflectances of the display light combiner and the beamsplitter in the two-element optical configuration are depicted as constant across a broad spectrum (e.g. entire visible spectrum, etc.). However, it should be noted that, in various embodiments, one, some or all of the transmittances and reflectances may or may not be constant across the broad spectrum.

The combination of the external display light and the device display light reaching the viewer's vision field by way of the display light combiner and the beamsplitter in the two-element optical configuration of the wearable or non-wearable computing device comprises transmitted and beamsplit external display light of each wavelength band in the first triband at a respective observer received intensity (e.g., "Blu1", "Grn1" and "Red1" in FIG. 1H, etc.). The respective observer received intensity for each such wavelength band in the first triband is a corresponding incoming light intensity (as illustrated in FIG. 1G) of the external display light ("S") in the wavelength band multiplied with a corresponding transmittance (as illustrated in FIG. 1H) representing an applicable transmission efficiency of the display light combiner for the wavelength band in the first triband, which is further multiplied with a corresponding transmittance (as illustrated in FIG. 1H) representing an applicable transmission efficiency of the beamsplitter for the wavelength band in the first triband.

At the same time, the combination of the external display light and the device display light reaching the viewer's vision field comprises reflected and beamsplit device display light of each wavelength band in the second triband at an observer received intensity (e.g., "Blu2", "Grn2" and "Red2" in FIG. 1G, etc.). The respective observer received intensity for each such wavelength band in the second triband is a corresponding incoming light intensity (as illustrated in FIG. 1G) of the device display light ("D") in the wavelength band multiplied with a corresponding reflectance (as illustrated in FIG. 1H) representing an applicable reflection efficiency of the beamsplitter for the wavelength band in the second triband, which is further multiplied with a corresponding transmittance (as illustrated in FIG. 1H) representing an applicable transmission efficiency of the beamsplitter for the wavelength band in the second triband.

FIG. 1I illustrates example transmittances and reflectances of a display light combiner and a beamsplitter in a two-element optical configuration (e.g., as depicted in FIG. 1G, etc.) and observer received intensity of a combination of external display light transmitted and beamsplit through the two-element optical configuration and device display light reflected and beamsplit with the two-element optical configuration.

The two-element optical configuration of the computing device comprises a light selection layer implemented with a light selection coating in the form of a triband dichroic filter coating disposed in an interior surface of the display light combiner in the two-element optical configuration. The triband transmittance and triband reflectance of FIG. 1I represent transmission and reflection efficiencies of the triband dichroic filter coating, respectively.

As illustrated, the triband dichroic filter coating provides triband transmissions with a relatively high transmission efficiency for light with wavelengths in the first triband such as the external display light S_screen and triband reflections with a relatively high reflection efficiency for light with wavelengths in the second triband such as the device display light S_display. Complementarily, the triband dichroic filter coating rejects with a relatively low reflection efficiency for reflection of light with wavelengths in the first triband and rejects with a relatively low transmission efficiency for transmission of light with wavelengths in the second triband.

The combination of the external display light and the device display light reaching the viewer's vision field by way of the display light combiner and the beamsplitter in the two-element optical configuration of the computing device comprises transmitted and beamsplit external display light of each wavelength band in the first triband at a respective observer received intensity (e.g., "Blu1", "Grn1" and "Red1" in FIG. 1H, etc.). The respective observer received intensity for each such wavelength band in the first triband is a corresponding incoming light intensity (as illustrated in FIG. 1G) of the external display light ("S") in the wavelength band multiplied with a corresponding transmittance (as illustrated in FIG. 1I) representing an applicable transmission efficiency of the display light combiner for the wavelength band in the first triband, which is further multiplied with a corresponding transmittance (as illustrated in FIG. 1I) representing an applicable transmission efficiency of the beamsplitter for the wavelength band in the first triband.

At the same time, the combination of the external display light and the device display light reaching the viewer's vision field comprises reflected and beamsplit device display light of each wavelength band in the second triband at an observer received intensity (e.g., "Blu2", "Grn2" and "Red2" in FIG. 1G, etc.). The respective observer received intensity for each such wavelength band in the second triband is a corresponding incoming light intensity (as illustrated in FIG. 1G) of the device display light ("D") in the wavelength band multiplied with a corresponding reflectance (as illustrated in FIG. 1I) representing an applicable reflection efficiency of the beamsplitter for the wavelength band in the second triband, which is further multiplied with a corresponding transmittance (as illustrated in FIG. 1I) representing an applicable transmission efficiency of the beamsplitter for the wavelength band in the second triband.

### 6. POLARIZATION-BASED MULTIPLEXING

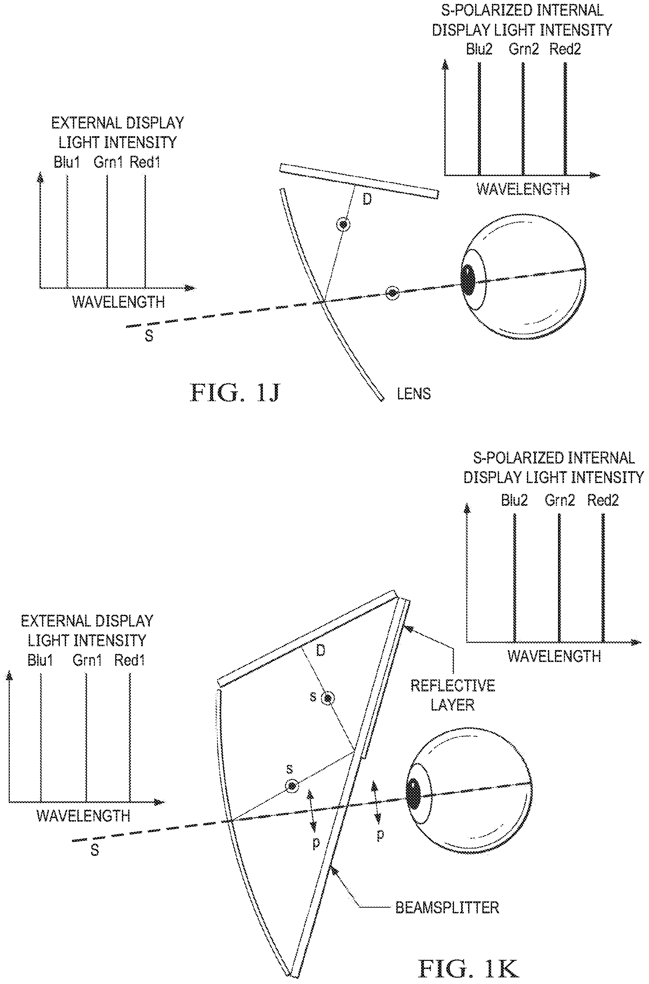

FIG. 1J illustrates an example single-element optical configuration, which is not according to the claimed subject-matter, implemented in a wearable or non-wearable computing device to perform polarization based multiplexing.

The single-element optical configuration of the computing device comprises a display light combiner (e.g., a lens in an eyeglass frame, etc.) that implements or performs the polarization-based multiplexing by combining external display light ("S") (e.g., projector light incident on and reflected from an external projection screen, direct light emitted from an external screen, etc.) of a first polarization state "P_screen" (e.g., unpolarized state, mixed polarization state, a pure polarization state, in a Poincare sphere, etc.) from an external image display and device display light ("D") such as modulated light of a second polarization state "P_display" (e.g., unpolarized state, mixed polarization state, a pure polarization state, in a Poincare sphere, etc.) emitted from a wearable or non-wearable device image display into a viewer's observer received light.

The first and second polarization states are different and may or may not be orthogonal to each other. **In** various embodiments, a wide variety of orthogonal or non-orthogonal polarization states, for example as represented in the Poincare Sphere, may be assigned, designated or generated for the first and second polarization states.

In an example, the first polarization state may be one of a unpolarized state, partially polarized state, mixed polarization state or pure polarization state, whereas the second polarization state may be a different one of a unpolarized state, partially polarized state, mixed polarization state or pure polarization state. In another example, the first polarization state may be one of two linear polarization states s and p, whereas the second polarization state may be the other of the two linear polarization states s and p. In another example, the first polarization state may be one of two circular polarization states, whereas the second polarization state may be the other of the two circular polarization states.

For the purpose of illustration only, the first polarization state may be unpolarized state, whereas the second polarization state may be s-polarization state. An interior surface (facing the viewer) of the display light combiner with a polarization filter (e.g., a polarization filter layer or film, etc.) that (e.g., totally, over 90%, over 99%, etc.) reflects incident light of s-polarization state and (e.g., totally, over 90%, over 99%, etc.) transmits incident light of p-polarization state.

The external display light ("S") may be any of: narrow (wavelength) band colored light, wide (wavelength) band color light, broad (wavelength) band color light, and so forth.

The external display light ("S") from the external image display may be represented as a first (e.g., RGB, etc.) triband comprising three first (e.g., narrow, wide, broad, etc.) wavelength bands (denoted as "Blu1", "Grn1" and "Red1" respectively) with their intensities depicted as heights in "external display light intensity" of FIG. 1J. The three first wavelength bands in the first triband have their respective (e.g., maximum, peak, actual, pixel-value-based, etc.) incoming light intensities, for example depending on display capabilities of the external image display, image data used to drive the external image display, etc.

The device display light ("D") from the device image display may be represented as a second (e.g., RGB, etc.) triband comprising three second (e.g., narrow, wide, broad, etc.) wavelength bands (denoted as "Blu2", "Grn2" and "Red2" respectively) with their intensities depicted as heights in "device display light intensity" of FIG. 1J. The three second wavelength bands in the second triband have their respective (e.g., maximum, peak, actual, pixel-value-based, etc.) incoming light intensities, for example depending on display capabilities of the device image display, image data used to drive the device image display, etc.

The display light combiner provides or acts as a transmissive medium through which a p-polarization state portion (or 50% in the present example) of the external display light ("S") of the first polarization state (the unpolarized state in the present example) transmits through to reach, or to be received in, the viewer's vision field with an applicable transmission efficiency.

At the same time, the display light combiner provides or acts as a beamsplitter or reflector (e.g., representing a lens, representing a lens with an additional coating/layer, etc.) with which the device display light ("D") of the second polarization state (or s-polarization state in the present example) is (e.g., partially, fully, etc.) reflected to reach, or to be received in, the viewer's vision field with an applicable reflection efficiency.

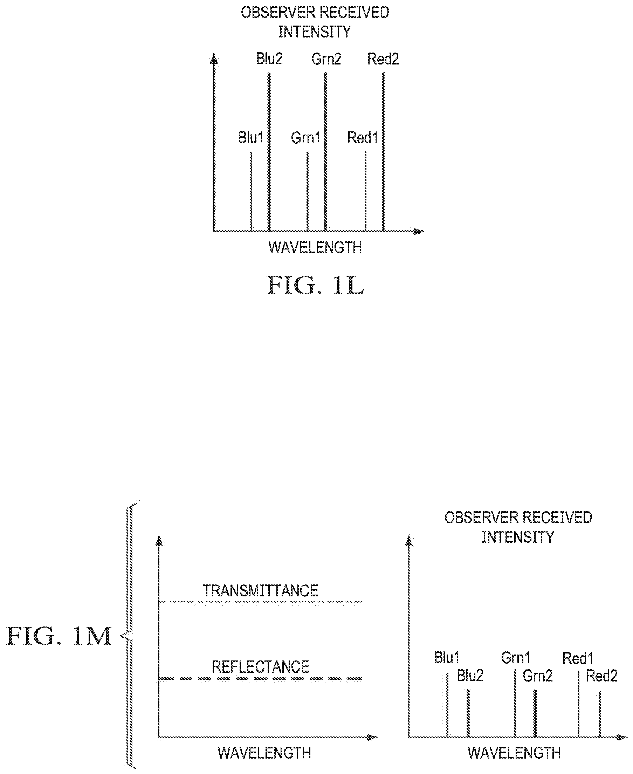

FIG. 1L illustrates example observer received intensity of a combination of external display light transmitted through a single-element optical configuration (e.g., FIG. 1J, etc.) of a wearable or non-wearable computing device implementing polarization based multiplexing by reflecting s-polarized light and transmitting p-polarized light and device display light reflected with the single-element optical configuration.

The combination of the external display light and the device display light reaching the viewer's vision field by way of the display light combiner in the single-element optical configuration of the computing device comprises the transmitted external display light portion (or 50% in the present example) of p-polarization state.

At the same time, the combination of the external display light and the device display light reaching the viewer's vision field comprises reflected device display light (100% in the present example) of s-polarization state.

FIG. 1K illustrates an example two-element optical configuration implemented in a wearable or non-wearable computing device, which is not according to the claimed subject-matter, to perform polarization based multiplexing. The two-element optical configuration of the computing device comprises a display light combiner (e.g., a lens in an eyeglass frame, etc.) and a first polarization based beamsplitter.

Device display light ("D") such as modulated light from a wearable or non-wearable device image display is directed to by the first polarization based beamsplitter and (e.g., partially, fully, etc.) redirected toward the display light combiner. In some operational scenarios, a (e.g., metallic, non-metallic, etc.) reflective layer may be disposed (e.g., on a surface, etc.) behind a portion of the first polarization based beamsplitter. The reflective layer behind the portion of the first polarization based beamsplitter reflects the device display light ("D") with a relatively high reflection efficiency to reach the display light combiner and prevents the device display light ("D") with a relatively low transmission efficiency from being transmitted directly toward the viewer's vision field. Additionally, optionally or alternatively, instead of or in addition to the reflective layer, a light absorbing layer may be deployed behind the beamsplitter to absorb light transmitting through the beamsplitter. Example configurations for the display light combiner may include, but are not necessarily limited to only, one or more of: a combination of broadband or wideband beamsplitter/reflector, polarization state converter, etc.; a combination of spectral beamsplitter/reflector, polarization state converter, etc.; and so on.

External display light ("S") (e.g., projector light incident on and reflected from an external projection screen, direct light emitted from an external screen, etc.) from an external image display is directed to the display light combiner in the two-element optical configuration of the computing device. The display light combiner (e.g., a lens in an eyeglass frame, etc.) implements or performs the polarization-based multiplexing by combining (e.g., a portion of, etc.) the external display light ("S") of a first polarization state "P_screen" (e.g., unpolarized state, mixed polarization state, a pure polarization state, in a Poincare sphere, etc.) from the external image display and (e.g., a portion of, etc.) the device display light ("D") of a second polarization state "P_display" (e.g., unpolarized state, mixed polarization state, a pure polarization state, in a Poincare sphere, etc.) emitted from the device image display and reflected by the first polarization state beamsplitter to be directed to transmit through the first polarization based beamsplitter to reach the viewer's vision field.

The first and second polarization states may or may not be different and may or may not be orthogonal to each other. In various embodiments, a wide variety of orthogonal or non-orthogonal polarization states, for example as represented in the Poincare Sphere, may be assigned, designated or generated for the first and second polarization states. One or both of the first polarization state may be unpolarized state(s), partially polarized state(s), mixed polarization state(s) or pure polarization state(s).

For the purpose of illustration only, the first polarization state may be unpolarized state, whereas the second polarization state may be s-polarization state.

An interior surface (facing the viewer) of the display light combiner with a second polarization based beamsplitter (e.g., a polarized lens, a polarization filter layer or film, etc.) or a light selection layer (e.g., a dichroic beamsplitting coating, a triband dichroic beamsplitting coating, etc.) that (e.g., totally, over 90%, over 99%, etc.) reflects a first circular polarization state portion in the device display light of s-polarization state and (e.g., totally, over 90%, over 99%, etc.) transmits a second circular polarization portion in the external display light of unpolarized state. By way of example but not limitation, the first circular polarization state portion may be one of left-circular and right-circular (clockwise or counterclockwise) polarization states, whereas the second circular polarization state portion may be the other of the left-circular and right-circular (clockwise or counterclockwise) polarization state.

On top of the second polarization based beamsplitter or the light selection layer, a polarization state converter such as a (e.g., thin film, membrane, cholesteric liquid crystal based, a quarter waveplate, a three-quarter waveplate, etc.) waveplate or retarder may be disposed with the display light combiner to convert light of an incoming polarization state into light of an outgoing polarization state.

In the present example, the polarization state converter may be a quarter waveplate (QWP) that converts incoming light from the second polarization state (s-polarization state) into outgoing light in the first circular polarization state or converts incoming light from the first circular polarization state into outgoing light in an orthogonal linearly polarized state (e.g., p-polarization state, etc.).

Thus, in the optical path of the device display light, the device display light of the second polarization state (s-polarization state) emitted from the device image display and reflected by the first polarization based beamsplitter first transmits through the polarization state converter (QWP) into the first circular polarization state. The device display light of the first circular polarization is then reflected by the second polarization based beamsplitter or the light selection layer with the display light combiner back into the polarization state converter (QWP). The polarization state converter (QWP) converts the device display light of the first circular polarization as reflected by the second polarization based beamsplitter or the light selection layer with the display light combiner into the device display light of the orthogonal linearly polarized state (p-polarization state in the present example). As the first polarization based beamsplitter is configured to reflect incident light of s-polarization state and transmit incident light of p-polarization state, the device display light of the orthogonal linearly polarized state (p-polarization state) transmits through the first polarization based beamsplitter with a relatively high (e.g., up to 100%, etc.) transmission efficiency.

At the same time, in the optical path of the external display light, a first circular polarization state portion (50%) of the external display light of the first polarization state (unpolarized state) emitted from the external image display first transmits through the second polarization based beamsplitter or the light selection layer with the display light combiner, converted by the polarization state converter (QWP) into the external display light of p-polarization state. As the first polarization based beamsplitter is configured to reflect incident light of s-polarization state and transmit incident light of p-polarization state, the external display light of p-polarization state transmits through the first polarization based beamsplitter with a relatively high (e.g., up to 100%, etc.) transmission efficiency.

The external display light ("S") may be any of: narrow (wavelength) band colored light, wide (wavelength) band color light, broad (wavelength) band color light, and so forth.

The external display light ("S") from the external image display may be represented as a first (e.g., RGB, etc.) triband comprising three first (e.g., narrow, wide, broad, etc.) wavelength bands (denoted as "Blu1", "Grn1" and "Red1" respectively) with their intensities depicted as heights in "external display light intensity" of FIG. 1K. The three first wavelength bands in the first triband have their respective (e.g., maximum, peak, actual, pixel-value-based, etc.) incoming light intensities, for example depending on display capabilities of the external image display, image data used to drive the external image display, etc.

The device display light ("D") from the device image display may be represented as a second (e.g., RGB, etc.) triband comprising three second (e.g., narrow, wide, broad, etc.) wavelength bands (denoted as "Blu2", "Grn2" and "Red2" respectively) with their intensities depicted as heights in "device display light intensity" of FIG. 1K. The three second wavelength bands in the second triband have their respective (e.g., maximum, peak, actual, pixel-value-based, etc.) incoming light intensities, for example depending on display capabilities of the device image display, image data used to drive the device image display, etc.

FIG. 1M illustrates example transmittance and reflectance of a display light combiner of a two-element optical configuration (e.g., FIG. 1K, etc.) of a wearable or non-wearable computing device implementing polarization based multiplexing and observer received intensity of a combination of external display light transmitted through the two-element optical configuration and device display light reflected or beamsplit with the two-element optical configuration.

The combination of the external display light from an external image display (e.g., FIG. 1K, etc.) and the device display light from a device display (e.g., FIG. 1K, etc.) reaching the viewer's vision field by way of the display light combiner and the first polarization beamsplitter in the two-element optical configuration of the computing device comprises a transmitted external display light portion of p-polarization state multiplied by a transmittance (as depicted in FIG. 1M) of the display light combiner, which may include a second polarization based beamsplitter (e.g., a polarized lens, a polarization filter layer or film, etc.) or a light selection layer (e.g., a dichroic beamsplitting coating, a triband dichroic beamsplitting coating, etc.), a polarization state converter (e.g., QWP, etc.), etc.

At the same time, the combination of the external display light and the device display light reaching the viewer's vision field comprises a transmitted device display light portion of p-polarization state - e.g., totally reflected by the first polarization based beamsplitter but partially reflected by the display light combiner with the second polarization based beamsplitter or the light selection layer - multiplied by a reflectance (as depicted in FIG. 1M) of the display light combiner.

For the purpose of illustration, transmittance(s) and reflectance(s) of the display light combiner and/or the first polarization based beamsplitter in the two-element optical configuration are depicted as constant across a broad spectrum (e.g. entire visible spectrum, etc.). However, it should be noted that, in various embodiments, one, some or all of the transmittance(s) and reflectance(s) may or may not be constant across the broad spectrum.

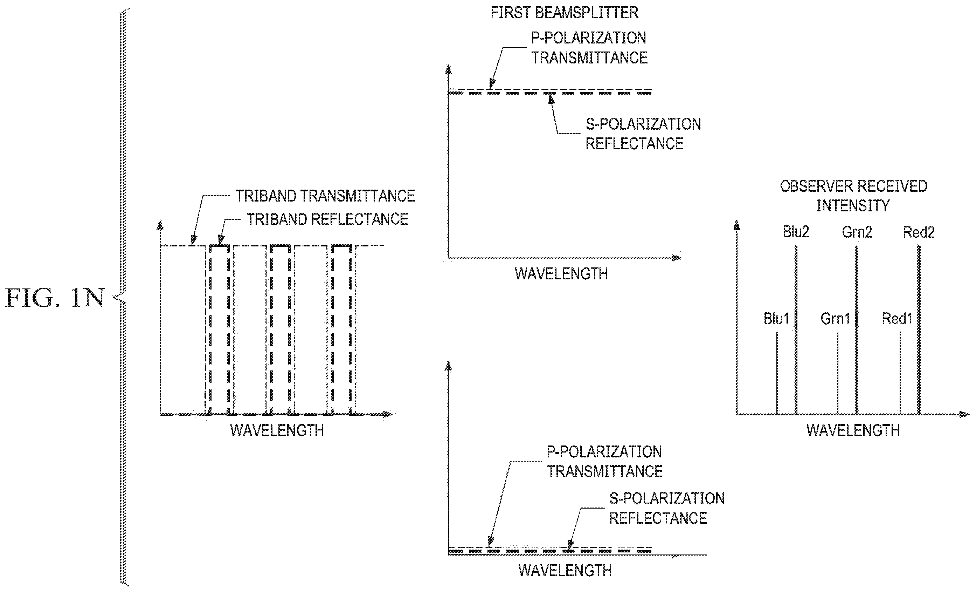

FIG. 1N illustrates example transmittance and reflectance of a display light combiner of a two-element optical configuration (e.g., FIG. 1K, etc.) of a wearable or non-wearable computing device implementing polarization based multiplexing and observer received intensity of a combination of external display light transmitted through the two-element optical configuration and device display light reflected or beamsplit with the two-element optical configuration.

The two-element optical configuration of the computing device comprises a light selection layer implemented with a light selection coating in the form of a triband dichroic filter coating disposed in an interior surface of the display light combiner in the two-element optical configuration. The triband transmittance and triband reflectance of FIG. 1N represent transmission and reflection efficiencies of the triband dichroic filter coating, respectively. The two-element optical configuration of the computing device comprises a first polarization based beamsplitter with a constant transmittance of up to 100% for incident light of p-polarization state and a constant reflectance of up to 100% for incident light of s-polarization state as indicated in FIG. 1N.

As illustrated, the triband dichroic filter coating provides triband transmissions with a relatively high transmission efficiency for light with wavelengths in the first triband such as the external display light S_screen and triband reflections with a relatively high reflection efficiency for light with wavelengths in the second triband such as the device display light S_display. Complementarily, the triband dichroic filter coating rejects with a relatively low reflection efficiency for reflection of light with wavelengths in the first triband and rejects with a relatively low transmission efficiency for transmission of light with wavelengths in the second triband.

The combination of the external display light from an external image display and the device display light from a device image display reaching the viewer's vision field by way of the display light combiner and the first polarization based beamsplitter in the two-element optical configuration of the computing device comprises transmitted and beamsplit external display light of p-polarization state in each wavelength band in the first triband at a respective observer received intensity (e.g., "Blu1", "Grn1" and "Red1" in FIG. 1N, etc.). The respective observer received intensity for each such wavelength band in the first triband is a corresponding incoming light intensity (as illustrated in FIG. 1N) of the external display light ("S") of the first circular polarization state (to be converted to p-polarization by QWP) in the wavelength band multiplied with a corresponding transmittance (as illustrated in FIG. 1N) representing an applicable transmission efficiency of the display light combiner for incident light of the first circular polarization state in the wavelength band in the first triband, which is further multiplied with a corresponding transmittance (as illustrated in FIG. 1N) representing an applicable transmission efficiency of the first polarization based beamsplitter for incident light of p-polarization in the wavelength band in the first triband.

At the same time, the combination of the external display light and the device display light reaching the viewer's vision field comprises reflected and beamsplit device display light of p-polarization state in each wavelength band in the second triband at an observer received intensity (e.g., "Blu2", "Grn2" and "Red2" in FIG. 1N, etc.). The respective observer received intensity for each such wavelength band in the second triband is a corresponding incoming light intensity (as illustrated in FIG. 1K) of the device display light ("D") of s-polarization state in the wavelength band multiplied with a corresponding reflectance (as illustrated in FIG. 1N) representing an applicable reflection efficiency of the first polarization based beamsplitter for incident light of s-polarization state in the wavelength band in the second triband, which is further multiplied with a corresponding reflectance (as illustrated in FIG. 1N) representing an applicable reflection efficiency of the display light combiner for incident light of the first circular polarization state in the wavelength band in the second triband, which is further multiplied with a corresponding transmittance (as illustrated in FIG. 1N) representing an applicable transmission efficiency of the first polarization state beamsplitter for incident light of p-polarization state in the wavelength band in the second triband.

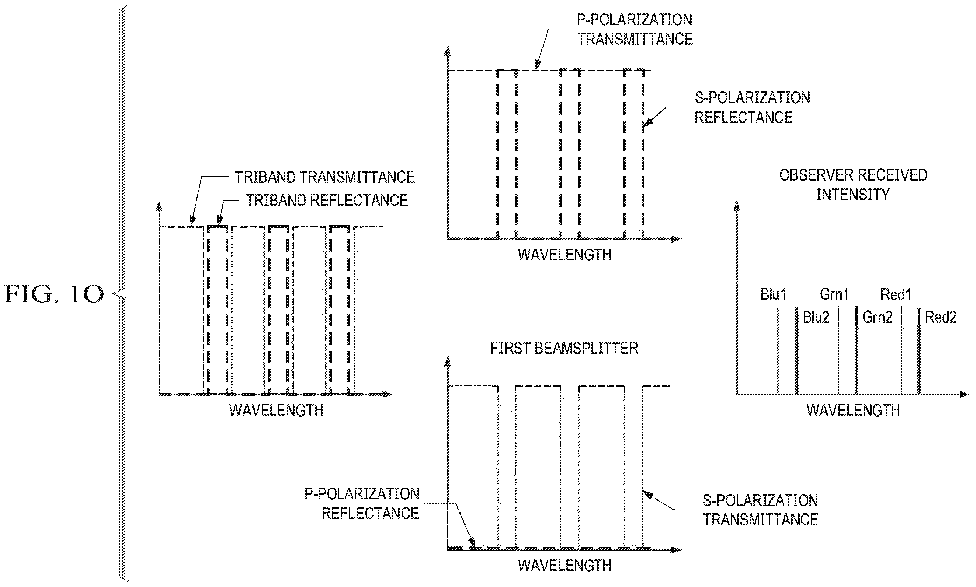

FIG. 1O illustrates example transmittance and reflectance of a display light combiner of a two-element optical configuration (e.g., FIG. 1K, etc.) of a wearable or non-wearable computing device implementing polarization based multiplexing and observer received intensity of a combination of external display light transmitted through the two-element optical configuration and device display light reflected or beamsplit with the two-element optical configuration.

The two-element optical configuration of the computing device comprises a light selection layer implemented with a light selection coating in the form of a triband dichroic filter coating disposed in an interior surface of the display light combiner in the two-element optical configuration. The triband transmittance and triband reflectance of FIG. 1O represent transmission and reflection efficiencies of the triband dichroic filter coating, respectively.

As illustrated, the triband dichroic filter coating provides triband transmissions with a relatively high transmission efficiency for light with wavelengths in the first triband such as the external display light S_screen and triband reflections with a relatively high reflection efficiency for light with wavelengths in the second triband such as the device display light S_display. Complementarily, the triband dichroic filter coating rejects with a relatively low reflection efficiency for reflection of light with wavelengths in the first triband and rejects with a relatively low transmission efficiency for transmission of light with wavelengths in the second triband.

The two-element optical configuration of the computing device comprises a first polarization based beamsplitter with constant transmittance (e.g., 50% or more, etc.) and reflectance (e.g., 50% or less, etc.) for incident light of p-polarization state and a triband reflectance and an inverse triband transmittance for incident light of s-polarization state as indicated in FIG. 1O.

The combination of the external display light from an external image display and the device display light from a device image display reaching the viewer's vision field by way of the display light combiner and the first polarization based beamsplitter in the two-element optical configuration of the computing device comprises transmitted and beamsplit external display light of p-polarization state in each wavelength band in the first triband at a respective observer received intensity (e.g., "Blu1", "Grn1" and "Red1" in FIG. 1O, etc.). The respective observer received intensity for each such wavelength band in the first triband is a corresponding incoming light intensity (as illustrated in FIG. 1O) of the external display light ("S") of the first circular polarization state (to be converted to p-polarization by QWP) in the wavelength band multiplied with a corresponding transmittance (as illustrated in FIG. 1O) representing an applicable transmission efficiency of the display light combiner for incident light of the first circular polarization state in the wavelength band in the first triband, which is further multiplied with a corresponding transmittance (as illustrated in FIG. 1O) representing an applicable transmission efficiency of the first polarization based beamsplitter for incident light of p-polarization in the wavelength band in the first triband.

At the same time, the combination of the external display light and the device display light reaching the viewer's vision field comprises reflected and beamsplit device display light of p-polarization state in each wavelength band in the second triband at an observer received intensity (e.g., "Blu2", "Grn2" and "Red2" in FIG. 1O, etc.). The respective observer received intensity for each such wavelength band in the second triband is a corresponding incoming light intensity (as illustrated in FIG. 1K) of the device display light ("D") of s-polarization state in the wavelength band multiplied with a corresponding reflectance (as illustrated in FIG. 1O) representing an applicable reflection efficiency of the first polarization based beamsplitter for incident light of s-polarization state in the wavelength band in the second triband, which is further multiplied with a corresponding reflectance (as illustrated in FIG. 1O) representing an applicable reflection efficiency of the display light combiner for incident light of the first circular polarization state in the wavelength band in the second triband, which is further multiplied with a corresponding transmittance (as illustrated in FIG. 1O) representing an applicable transmission efficiency of the first polarization state beamsplitter for incident light of p-polarization state in the wavelength band in the second triband.

Example polarizing optical elements such as beamsplitter, filter, combiner, etc., may include, but are not necessarily limited to only, any of: wire grid polarizers, polarizing beamsplitter cubes, polarizing gratings, geometric phase lenses, Pencharatnam-Berry phase lenses, thin film polarizing beamsplitters, polarization coatings, polarization thin films, waveplates, retarders, linear polarizers, circular polarizers, beam-splitting polarizers, birefringent polarizers, thin film polarizers, phase retardation plates or films, polarization modulators such as liquid crystal based spatially or temporally varying or switchable phase retardation elements, arrays or modulators, and so forth.

Polarization state "P_screen" of external display light from an external image display and polarization state "P_display" of device display light from a device image display may, but is not required to, be orthogonally polarized externally or internally. Polarization optics may be incorporated by a wearable or non-wearable computing device or the device image display therein and/or by the external image display to control or convert incoming polarization states to outgoing polarization states, which may become orthogonal (or as orthogonal as possible for achieving a relatively high efficiency) for example internally or externally in a device or a component (e.g., an optical element, lens, beamsplitter, light combiner, etc.).

In some operational scenarios, the external display light may be (e.g., dominantly, etc.) linearly or circularly polarized. The external image display generating the external display light may be IMAX 3D with linearly polarized light, RealD 3D with circular polarized light (with further time-multiplexing by RealD ZScreen), and so forth.

In some operational scenarios, the device display light may be (e.g., dominantly, etc.) linearly or circularly polarized. The device image display generating the device display light may comprise device optics (e.g., AR optics, VR optics, immersive video optics, etc.) that use polarization control elements to arrange or achieve polarization states directly or indirectly from polarization states of the external display light and the device display light to be orthogonally linearly polarized or orthogonally circularly polarized (e.g., right-circular, left-circular, etc.)

Example polarized projection or display systems may include, but are not necessarily limited to only, any of: polarized projector and corresponding polarization preserving screen, laser projector without internal depolarization components, LCoS/DLP projector with polarizer in the projector internal optical path or outside the projector in front of projection lens, LCD or OLED display, TV, monitor, laptop/tablet screen, mobile phone screen, etc. Polarization preserving screen may be silver screen for polarization based 3-D stereoscopic projection system. LCD display light output may be polarized due to an LCD operating principle implemented in an LCD display. OLED display light output may be circularly polarized due to a circular polarizer film for reducing ambient light reflection in an OLED display.

In some embodiments, as illustrated in FIG. 1K and FIG. 1O, spectral-polarization multiplexing (e.g., a combination of polarization multiplexing and spectral polarization, etc.) may be used to achieve a relatively high efficiency. Spectral and/or polarization multiplexing may be accomplished or implemented individually, separately and/or optimally in specific (e.g., optical, electrooptical, etc.) elements. Spectral and/or polarization multiplexing may be accomplished or implemented jointly and/or optimally in a combination (e.g., optical, electrooptical, etc.) elements.

In operational scenarios according to the claimed subject-matter, to enhance or increase optical efficiency, the first spectral emission S_screen ("S") and the second spectral emission S_display ("D") have no wavelength overlap or spectral overlap. For example, the first spectral emission S_screen ("S") and the second spectral emission S_display ("D") may be spectrally orthogonal or near orthogonal.

However, it should be noted that there is no need in all operational scenarios that the first spectral emission S_screen ("S") and the second spectral emission S_display ("D") has to be spectrally orthogonal, for example as illustrated in FIG. 1E and FIG. 1F. Regardless of whether the first spectral emission S_screen ("S") and the second spectral emission S_display ("D") are spectrally orthogonal, display operations may still be performed with more or less optical efficiencies by one or both of an external display system including the external image display and a wearable or non-wearable device including the device image display.

**In** some operational scenarios, to enhance or increase optical efficiency, orthogonal and/or pure polarization states may be used for external display light and device display light as described herein.

However, it should be noted that there is no need in all operational scenarios that the external display light and the device display light have to be spectrally orthogonal or of orthogonal and/or pure polarization states. Regardless of whether the external display light and the device display light have to be spectrally orthogonal or of orthogonal and/or pure polarization states, display operations may still be performed with more or less optical efficiencies by one or both of an external display system including the external image display and a wearable or non-wearable device including the device image display.

Efficiency of the optical configuration in combining and propagating the external display light and the device display light to the viewer's vision field (or the viewer's eyes) may be enhanced in one or more modes of propagation implementing selective spectral or polarization based transmission, reflection, refraction, diffraction, dispersion and/or absorption in the optical path of one or both of the external display light and the device display light and the viewer's vision field.

**In** addition to incorporating passive spectral or polarization optical elements, the wearable or non-wearable device or the optical configuration thereof may employ active elements (e.g., electrooptical elements, etc.) that operate by wavelength conversion (e.g., a quantum dot layer converting an incoming light of blue or UV wavelengths to outgoing light of other colors or wavelengths, etc.), temporal modulation (e.g., temporally separated between right and left view images, temporally modulated pixel values, intensities and/or chrominances based on image data, laser projected light of a time sequence of RGB color light, etc.), spatial modulation (e.g., spectrally separated between right and left view images, polarization separated between right and left view images, spatially modulated pixel values, intensities and/or chrominances based on image data, etc.), phase modulation (e.g., modifying light wave phases through phase modifying active optical elements to form holographic images, etc.), light sources generating light of specific polarization states and/or spectral distribution, etc.

### 7. DEVICE IMAGE DISPLAYS

Wearable or non-wearable device image displays such as AR displays, VR displays, immersive displays, headmounted displays, etc., may be implemented in any in a wide variety of ways.

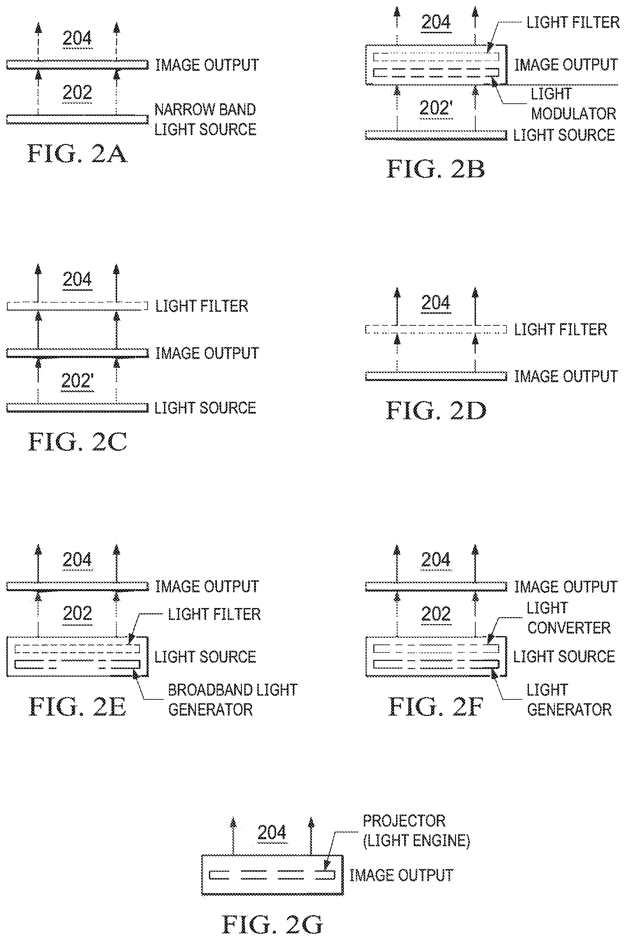

FIG. 2A illustrates an example device image display that outputs device display light 204 with a narrow band spectrum comprising relatively narrow wavelength bands in a triband of RGB colors. As illustrated, the device image display comprises a narrow band light source (e.g., a backlight unit, etc.) emitting light 202 of the narrow band spectrum directed to illuminate a light modulation layer in an image output. The light modulation layer in the image output may comprise light modulation units that regulate light expressions (e.g., transmissions, phase-modulated holographic light interference, etc.) of pixels (or voxels) arrayed or arranged in a pattern/shape, for example based on image data representing device display images to be rendered to a viewer. The pattern/shape in which the pixels are arrayed or arranged may be a two-dimensional (2D) display comprising rows and columns of pixels, a rectangular viewport, a non-rectangular viewport, a three-dimensional (3D) region in which holographic images are rendered, etc. The light expressions of the pixels as regulated based on the image data represent the device display light (204) that is directed to a display light combiner of an optical configuration of the viewer's wearable or non-wearable device.

The narrow band light source may comprise, or may be implemented with, triband RGB laser diodes; triband RGB LEDs; triband RGB backlight films; and so forth.

Additionally, optionally or alternatively, as illustrated in FIG. 2E, the narrow band light source may be implemented with a broadband light generator, a light filter, etc. In an example, the broadband light source may be a broadband (e.g., wideband, cover more than two or more RGB colors, etc.) backlight unit emitting broadband light directed to illuminate the light filter. The light filter may be a selective wavelength absorption film disposed on, near or in front of the broadband light generator to generate the light (202) of the narrow band spectrum.

Additionally, optionally or alternatively, as illustrated in FIG. 2F, the narrow band light source may be implemented with a light generator, a light converter, etc. In an example, the light generator in the narrow band light source may be blue LEDs (e.g., in a backlight film, as discrete elements, etc.). The light converter may be composed of narrow band red and green light conversion/regeneration materials such as phosphors, quantum dots, perovskite, etc., disposed on or near the blue LEDs. In another example, the light generator in the narrow band light source may be UV LEDs (e.g., in a backlight film, as discrete elements, etc.). The light converter may be composed of narrow band RGB light conversion/regeneration materials such as phosphors, quantum dots, perovskite, etc., disposed on or near the UV LEDs to generate the light (202) of the narrow band spectrum.

In some operational scenarios, as illustrated in FIG. 1A, a device image display may be implemented with a light source such as a broadband (e.g., wideband, cover more than two or more RGB colors, etc.) backlight unit, an image output such as an liquid crystal display (LCD) based light modulation layer, a light filter such as an internal triband filter between the image output and the light source.

In some operational scenarios, a device image display may be implemented with a light source, an image output, a light filter such as an internal (e.g., triband, three single-band, etc.) filter as illustrated in FIG. 2B or an external triband filter as illustrated in FIG. 2C between the image output and the display light combiner of the optical configuration of the viewer's wearable or non-wearable device, etc. The broadband light source may be a broadband (e.g., wideband, cover more than two or more RGB colors, etc.) backlight unit emitting broadband light 202' directed to illuminate the image output. The image output may be a liquid crystal display (LCD) based light modulation layer that generates unfiltered modulated light directed to the internal filter of FIG. 2B or the external triband filter of FIG. 2C. The filter of FIG. 2B or FIG. 2C then filters the unfiltered modulated light to generate (filtered) narrow band modulated light 204.

The internal filter of FIG. 2B may be implemented as in-cell thin film narrow band color filter array customized for narrow band transmission in front of light modulation units (e.g., pixels, subpixels, etc.) in the image display. The external triband filter of FIG. 2C may be implemented as narrow-band color filter array or color conversion array in front of light modulation units (e.g., pixels, subpixels, etc.) in the image display, a selective wavelength absorption film in front of the image display, etc.

In some operational scenarios, as illustrated in FIG. 2D, a device image display may be implemented (e.g., without backlight unit, etc.) with an image output, a light filter such as an internal (e.g., triband, three single-band, etc.) filter or an external triband filter between the image output and the display light combiner of the optical configuration of the viewer's wearable or non-wearable device. The image output may be an OLED based light generation- and-modulation layer comprising OLED display cells that generate unfiltered modulated light directed to the internal filter or the external triband filter. The filter then filters the unfiltered modulated light to generate (filtered) narrow band modulated light 204. The internal filter may be implemented as in-cell thin film narrow band color filter array customized for narrow band transmission in front of the OLED display cells (e.g., pixels, subpixels, etc.) in the image display. The external triband filter may be implemented as narrow-band color filter array or color conversion array in front of the OLED based image display, a selective wavelength absorption film in front of the OLED-based image display, etc.

In some operational scenarios not according to the claimed subject-matter, as illustrated in FIG. 2G, a device image display may be implemented without backlight unit, without light filter, etc. An image output of the device image display may be implemented with micro/pico size projector, micro/pico size light waveguide, scanning RGB laser projectors, Liquid Crystal on Silicon (LCoS) or Digital Light Processing (DLP) projector with narrow triband light engines with RGB LEDs or laser diodes, and so forth.

### 8. AUGMENTED ENTERTAINMENT SYSTEM

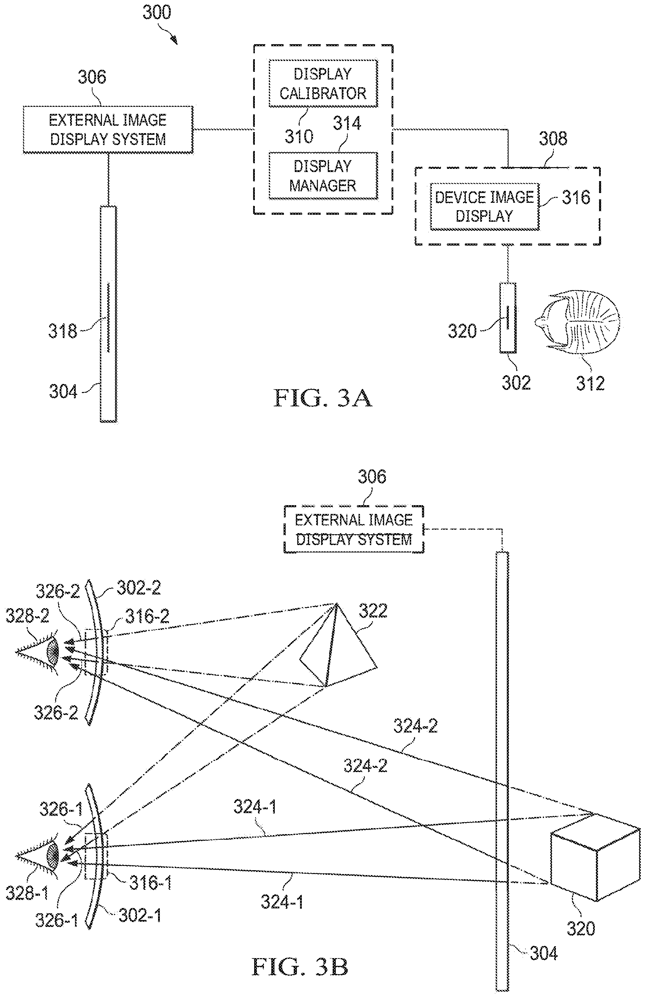

FIG. 3A illustrates an example augmented entertainment system configuration 300 that comprises an external image display 304 (e.g., a cinema, a TV, etc.) operating with an external image display system 306 to output external display light rendering external display images and a device image display 316 (e.g., AR display, VR display, immersive video display, etc.) operating with a wearable or non-wearable computing device 308 to output device display light rendering device display images. One or more computing systems comprising electronic elements, optical elements, electrooptical elements, etc., may be used to implement some or all of the augmented entertainment system configuration (300) including but not limited to the computing device (308), the external image display system (306), the external image display (304) and the device image display (316).

A display calibrator 310 and a (e.g., real time, etc.) display manager 314 may be implemented as a separate device, a part of one of the computing device (308) and the external image display system (306), or as a distributed system involving one or both of the computing device (308) and the external image display system (306).

For the purpose of achieving individual and/or collective color accuracy in the external and device display images, the display calibrator (310) and/or the display manager (314) perform (e.g., real time, near real time, non-real-time, etc.) display calibration (e.g., color calibration, dynamic range calibration, etc.) and display management (e.g., color management, dynamic range management, etc.) to control and match color spaces of the external image display (304) (or the external image display system (306)) and the device image display (316) (or the computing device (308)), as seen in the eyes of a viewer 312 (or user) of the computing device (308).

In an example, the display calibrator (310) and/or the display manager (314) operate with the external image display system (306) to map a (e.g., relatively large, etc.) color gamut of the external image display (304) (or the external image display system (306)) to a (e.g., relatively small, etc.) color gamut of the device image display (316) (or the computing device (308)) as seen in the eyes of the viewer (312).

In another example, the display calibrator (310) and/or the display manager (314) operate with the computing device (308) to map a (e.g., relatively large, etc.) color gamut of the external image display (304) (or the external image display system (306)) to a (e.g., relatively small, etc.) color gamut of the device image display (316) (or the computing device (308)) as seen in the eyes of the viewer (312).

In another example, the display calibrator (310) and/or the display manager (314) operate with both the computing device (308) and the external image display system (306) to map (e.g., unequal, different, etc.) color gamuts of the external image display (304) (or the external image display system (306)) and the device image display (316) (or the computing device (308)) to a common-denominator color gamut, as supported by both the external image display (304) and the device image display (316) and as seen in the eyes of the viewer (312).

Operating conditions, manufacturing differences, device models, light sources, incorporated electronic and/or optical elements, etc., involved in delivering one or both of the external display light and the device display light may vary in the field to some extent to cause color shifts. Additionally, optionally or alternatively, one or both of the external display light and the device display light may make use of spectral elements (e.g., narrow wavelength band, metameric instable light sources, etc.) that are prone to metameric instability that causes inadvertent or deliberate color shifts among different viewers.

Color measurements used to perform display calibration of one or both of the external image display (304) and the device image display (316) can be performed by the display calibrator (310) in the viewer's (eye viewing) positions to capture effects of an optical configuration 302 (e.g., a light combining optical configuration comprising a display light combiner, etc.) of the computing device (308) on spectral emissions of the external display light from the external image display (304) and the device display light from the device image display (316) of the computing device (308).

Additionally, optionally or alternatively, color characterization may be performed - with or without involving the viewer - individually and/or collectively with the external image display (304), the device image display (316) of the computing device (308), the optical configuration (302) of the computing device (308), etc.

Display calibration can be achieved by (e.g., computationally, through precomputed lookup tables, etc.) estimating effects of the optical configuration (302) of the computing device (308) on the external display light and the device display light based at least in part on peak luminance, black level, color or spectral measurements and/or standard colorimetry (e.g., that maps luminance and chrominance values to colors based on the human visual system or an average viewer, etc.).

Color and dynamic range enhancement may be achieved by the display manager (314) in conjunction with a dynamic range controller, the display calibrator (310), etc., by performing some or all of a number of color management operations, dynamic range control or management operations, etc.

For example, in response to determining based at least in part on display calibration measurements (e.g., color calibration measurements, etc.) that the device image display (316) has a higher dynamic range (e.g., has a higher peak luminance, etc.) than a dynamic range of the external image display (304), the device image display (316) can enhance (local) dynamic range of one or more selected regions 318 (or image portions) of the external image display (304) as perceived or viewed by the viewer (312). For example, additional more luminance light may be directed by the device image display (316) to one or more corresponding regions 320 (or image portions) in the optical configuration (302) of the computing device (308) to be combined with the external display light from the one or more selected regions (318) of the external image display (304) and to achieve a higher dynamic range in the one or more corresponding regions (320).

Similarly, in response to determining based at least in part on display calibration measurements (e.g., dynamic range calibration measurements, etc.) that color primaries of the device image display (316) are more saturated (e.g., have a larger color gamut, etc.) than color primaries of the external image display (304), the device image display (316) can enhance (local) color saturation of one or more selected regions (e.g., 318, etc.) of the external image display (304) as perceived or viewed by the viewer (304). For example, additional more color saturated light may be directed by the device image display (316) to one or more corresponding regions (e.g., 320, etc.) in the optical configuration (302) of the computing device (308) to be combined with the external display light from the one or more selected regions (318) of the external image display (304) and to achieve more color saturation in the one or more corresponding regions (320).

Some or all of the display capabilities of one or both of the external image display (304) and the device image display (316) may be measured, analyzed, calibrated, etc., in real time or near real time with display operations that render the external display images and the device display images. Additionally, optionally or alternatively, some or all of the display capabilities of the external image display (304) and the device image display (316) may be measured, analyzed, calibrated, etc., before (e.g., in factory, etc.) the display operations that render the external display images and the device display images.

Display capability metadata indicating or specifying some or all of the display capabilities may be generated and/or stored with the external image display system (306), the computing device (308), another device operating in conjunction with one or both of the external image display system (306) and the computing device (308), etc. Additionally, optionally or alternatively, content specific or content dependent metadata can be generated, for example, based at least in part on user input representing creative intent from creator(s) of the external display images and/or the device display images to support real time color and/or dynamic range mapping and enhancement for one or both of the external image display (304) and/or the device image display (316).

**In** some operational scenarios, a system (or a system configuration) as described herein may be used to support simultaneous multiplexing of AR and non-AR multi-user experience. The system comprises an external image display system and a plurality of wearable or non-wearable computing devices respectively operated by a plurality of viewers (or users). The external image display system may be a dual triband projection system such as a Dolby Cinema system with Dolby 3D capability, a dual or time-multiplexed polarization projector system, and so on. The dual triband projection system may emit or output external display light in two tribands - each of which has three colors primaries - for a total of six color primaries.

In an example, the dual triband projection system emits or outputs external display light rendering a first (triband) external display image depicting visual content as well as a corresponding second (triband) external display image depicting the same visual content. The first external mage is rendered with a first external display light portion of a first triband spectrum, transmits through an optical configuration (e.g., lens, a display light combiner, etc.) of a wearable or non-wearable computing device, and is visible to a viewer or user of the computing device. The first external image is also visible to a viewer or user without using a wearable device. The second external mage is rendered with a second external display light portion of a second different triband spectrum (different from the first triband spectrum), transmits through the optical configuration of the computing device, and is visible to the viewer or user of the computing device. The second external image is also visible to the viewer or user without using a wearable or non-wearable device.

**In** another example, the dual triband projection system emits or outputs external display light rendering a first (triband) external display image depicting visual content as well as a corresponding second (triband) external display image depicting the same visual content. The first external mage is rendered with a first external display light portion of a first triband spectrum, transmits through an optical configuration (e.g., lens, a display light combiner, etc.) of a wearable or non-wearable computing device, and is visible to a viewer or user of the computing device. The first external mage is also visible to a viewer or user without using a wearable device. The second external mage is rendered with a second external display light portion of a second different triband spectrum (different from the first triband spectrum) and is visible to the viewer or user without using a wearable (or non-wearable) device. The second external mage is blocked from transmission through the optical configuration (e.g., lens, a display light combiner, etc.) of the wearable or non-wearable computing device, and is not visible to the viewer or user of the computing device.

In another example, the dual triband projection system emits or outputs external display light rendering a first (triband) external display image depicting visual content as well as a corresponding second (triband) external display image depicting the same visual content. An optical configuration of a wearable or non-wearable computing device as described herein may comprise two different optical configuration portions corresponding to left and right views of a viewer or user of the computing device. One of the two different optical configuration portions in the optical configuration of the computing device may filter or remove one of the first and second external display images, whereas the other of the two different optical configuration portions in the optical configuration of the computing device may filter or remove the other of the first and second external display images. The first and the second external display images may be visible to a viewer or user without using a wearable (or non-wearable) device.

In some operational scenarios, for a viewer with a wearable or non-wearable computing device, an external display image from an external image display as described herein - e.g., a second external display image of a second triband spectrum - may be (e.g., simply, fully, partially, etc.) replaced by a device display image rendered with a device image display. Additionally, optionally or alternatively, for a viewer with a wearable or non-wearable computing device, an external display image from an external image display as described herein - e.g., a second external display image of a second triband spectrum - may be visible to the viewer and may be further enhanced by a device display image rendered with a device image display to enhance color precision and color gamut, to increase dynamic range and to increase spatial resolution/precision, thereby enhancing viewing experience and making it more immersive.

FIG. 3B illustrates example display operations of an augmented entertainment system configuration (e.g., 300, etc.). An external image display system (e.g., 306, etc.) in the augmented entertainment system configuration (300) renders (or displays) right view external display images and left view external display images on an external image display (e.g., 304, etc.). In some operational scenarios, the external image display (304) may be a shared image display that renders the right view and left view external display images to a plurality of viewers including but not limited to a viewer (e.g., 312 of FIG. 3A, etc.).

The viewer (312) operates with or uses a wearable or non-wearable computing device (e.g., 308 of FIG. 3A, etc.) comprising a device image display (e.g., 316 of FIG. 3A, etc.) and an optical configuration (e.g., 302 of FIG. 3A, etc.). The device image display of the computing device comprises a right view device image display portion 316-1 and a left view device image display portion 316-2 to render right view device display images and left view device display images, respectively. The optical configuration of the computing device comprises a right view optical configuration portion 302-1 and a left view optical configuration portion 302-2 corresponding right and left views or right and left eyes 328-1 and 328-2 of the viewer. In some operational scenarios, the device image display of the computing device may be a dedicated image display that renders the left view and right view device display images to the viewer.

The right view optical configuration portion 302-1 combines right view external display lights 324-1 rendering the right view external display images and right view device display lights 326-1 rendering the right view device display images. The left view optical configuration portion 302-2 combines left view external display lights 324-2 rendering the left view external display images and left view device display lights 326-2 rendering the left view device display images.

For the purpose of illustration only, the right and left device display images outputted by the right view and left view image display portions (316-1 and 316-2) of the device image display depict device image content 332, whereas the right and left external display images outputted by the external image display (304) depict device external image content 330.

The right view external display light portion (324-1) in external display light outputted or reflected from the external image display system (306) and propagated from the external image display (304) to the viewer's right and left eyes (328-1 and 328-2) is of a right view light property profile. The left view external display light portion (324-2) in the external display light outputted or reflected from the external image display system (306) and propagated from the external image display (304) to the viewer's right and left eyes (328-1 and 328-2) is of a left view light property profile. The right view and left light property profiles collectively constitute an overall light property profile for the external image display (304).

In some operational scenarios such as 2D display operations, the right view light property profile and the left view light property profile may be the same. For example, polarization states and/or spectral distributions (e.g., tribands, etc.) of the right view external display light portion (324-1) and the left view external display light portion (324-2), as respectively specified in the right view light property profile and the left view light property profile, may be identical or substantially (e.g., operationally non-distinguishable, etc.) the same. One or both of the right view external display light portion (324-1) and the left view external display light portion (324-2) may reach the viewer's vision field through one or both of the right view optical configuration portion (302-1) and the left view optical configuration portion (302-2) of the optical configuration.

In some operational scenarios such as 3D display operations, the right view light property profile and the left view light property profile may be different so that the right view external display light portion (324-1) can only be transmitted through the right view optical configuration portion (302-1) and is rejected by the left view optical configuration portion (302-2) while the left view external display light portion (324-2) can only be transmitted through the left view optical configuration portion (302-2) and is rejected by the right view optical configuration portion (302-1).

In an example, the augmented entertainment system configuration may be used to support spectral separation for 3D display operations. The right view external display light portion (324-1) (e.g., emitted by a first or right view laser projector or light engine, etc.) may (e.g., only, etc.) comprise light rays of a right view (e.g., RGB, etc.) triband according to the right view light property profile specified for or assigned to the right view external display light portion (324-1). The left view external display light portion (324-2) (e.g., emitted by a second or left view laser projector or light engine, etc.) may (e.g., only, etc.) comprise light rays of a left view (e.g., RGB, etc.) triband according to the left view light property profile specified for or assigned to the left view external display light portion (324-2). The right view triband may comprise three wavelength bands denoted as λ1, λ2, λ3. The left view triband may comprise three wavelength bands denoted as λ4, λ5, λ6. The wavelength bands in the right view triband may be (e.g., completely, etc.) non-overlapping with the wavelength bands in the left view triband.

In another example, the augmented entertainment system configuration may be used to support polarization separation for 3D display operations. The right view external display light portion (324-1) (e.g., emitted by a first or right view laser projector or light engine, etc.) may (e.g., only, etc.) comprise light rays of a right view polarization state (e.g., s-polarization, etc.) according to the right view light property profile specified for or assigned to the right view external display light portion (324-1). The left view external display light portion (324-2) (e.g., emitted by a second or left view laser projector or light engine, etc.) may (e.g., only, etc.) comprise light rays of a left view polarization state (e.g., p-polarization, etc.) according to the left view light property profile specified for or assigned to the left view external display light portion (324-2). The right view polarization state may be orthogonal to the left view polarization state.

In another example, the augmented entertainment system configuration may be used to support a combined polarization and spectral separation for 3D display operations. The right view external display light portion (324-1) (e.g., emitted by a first or right view laser projector or light engine, etc.) may (e.g., only, etc.) comprise light rays of a right view combination of a right view spectral distribution and a right view polarization state according to the right view light property profile specified for or assigned to the right view external display light portion (324-1). The left view external display light portion (324-2) (e.g., emitted by a second or left view laser projector or light engine, etc.) may (e.g., only, etc.) comprise light rays of a left view combination of a left view spectral distribution and a left view polarization state according to the left view light property profile specified for or assigned to the left view external display light portion (324-2). Light of the right view combination of the right view spectral distribution and the right view polarization state can only be transmitted through the right view optical configuration portion (302-1) and is rejected by the left view optical configuration portion (302-2). Light of the left view combination of the left view spectral distribution and the left view polarization state can only be transmitted through the left view optical configuration portion (302-2) and is rejected by the right view optical configuration portion (302-1).

The computing device (e.g., 308 of FIG. 3A, etc.) including the left and right view optical configuration (302-1 and 302-2), which may be rigidly fitted in an eye frame or a headmounted assembly, may be driven, for example by the viewer, to make relative motions in reference to the external image display (304). These relative motions may comprise any combination of one or more of: linear positions/displacements, rotational positions/displacements, linear velocities/speeds, rotational velocities/speeds, linear accelerations, rotational accelerations, etc.

Spatial position and/or spatial directions of the computing device over time may be characterized or measured through tracking/monitoring spatial coordinates of a representative spatial position (e.g., a point of symmetry, a central point along the interpupil distance, etc.) and/or a representative spatial direction of the computing device in relation to a reference coordinate system such as a reference Cartesian coordinate system stationary in a 3D space (e.g., a cinema, a home entertainment room, etc.) in which the external image display (304) is installed.

A device tracker - which may or may not be a part of the computing device - operates with the computing device to monitor spatial positions and spatial directions of the computing device. Example device tracking can be found in U.S. Provisional Patent Application No. 62/484,131 (Attorney Docket Number: D17011USP1; 60175-0301), with an application title of "PASSIVE MULTI-WEARABLE-DEVICES TRACKING" by Ajit Ninan and Neil Mammen, filed on April 11, 2017.

Rendering of some or all of the device display images and the external display images in the augmented entertainment system configuration (e.g., 300 of FIG. 3A, etc.) can be adjusted based at least in part on spatial positions and spatial directions of the computing device.

### 9. MULTIPLE MODULATION LAYERS IN IMAGE DISPLAY

A device image display as described herein may be implemented with one, two, three or more light modulation layers. Each of the light modulation layers may be modulated based at least in part on image data or light modulation images derived from device display images in the image data.

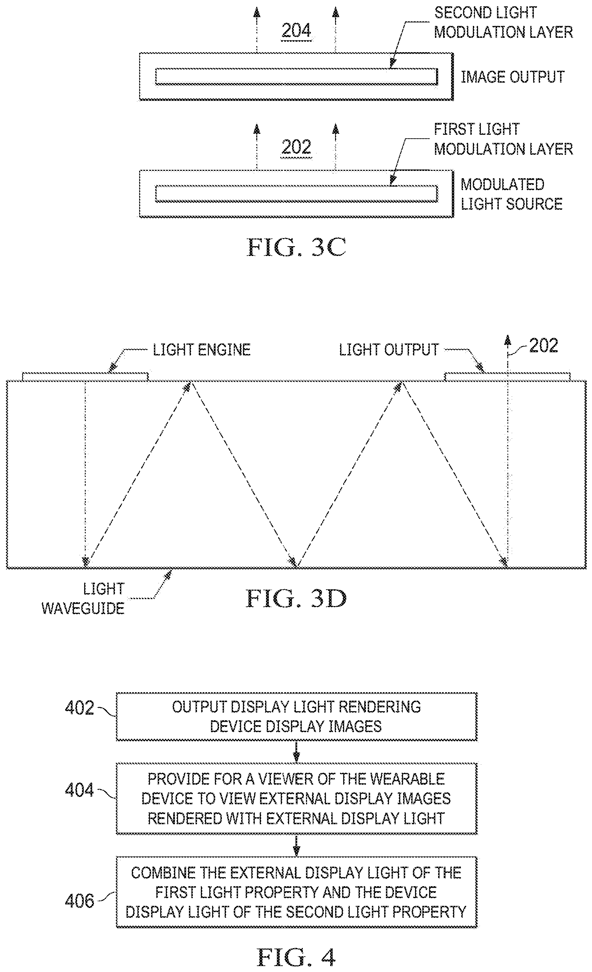

FIG. 3C illustrates an example system for multiple layer light modulation in a device image display of a wearable or non-wearable computing device. The device image display may output device display light (e.g., 204, narrow band, wide band, broadband, with specific polarization state(s), with specific spectral distribution(s), etc.) incident on a relatively small spatial area (e.g., a rendering surface of less than one-and-a-half inches in a diagonal dimension, etc.) of an interior surface of an optical configuration of the computing device.

In some operational scenarios, the device image display comprises a light source representing a first light modulation layer. The light source may comprise a plurality of (e.g., homogeneous, non-homogeneous, etc.) light source elements to generate modulated light (e.g., 202, narrow band, wide band, broadband, with specific polarization state(s), with specific spectral distribution(s), etc.) to illuminate an image output layer that represents a second light modulation layer. Each of the first light modulation layer and the second light modulation layer may be modulated based at least in part on image data. Each of the plurality of light source elements may be individually or collectively controlled to generate zero light to full intensity light. Each of the plurality of light source elements may be designated to illuminate (e.g., only, etc.) a respective surface area portion in a plurality of surface area portions constituting an (e.g., entire, etc.) surface area - of the image output - to be illuminated by the light (202) generated by the light source.

For example, a device display image of a given spatial resolution as received in the image data by a wearable or non-wearable computing device in a luminance channel (e.g., measuring brightness, etc.) may be down-sampled to a first light modulation image of a first spatial resolution coarser than the given spatial resolution. The first light modulation image of the first spatial resolution comprising downsampled luminance values of the device display image can be used to drive individually and/or collectively the plurality of light sources. Each pixel in a plurality of pixels represented in the first light modulation image corresponds to a respective group of pixels in a plurality of groups of pixels represented in the device display image and comprises an average luminance value of the respective group of pixels. In addition, each pixel in a plurality of pixels represented in the first light modulation image corresponds to a respective light source element in the plurality of light source elements represented in the first light modulation layer and is used to drive the respective light source element based at least in part on a pixel value of the pixel to generate an intensity of light from the respective light source element. The higher each such pixel in the first light modulation image is, the higher the intensity of light generated by the respective light source element.

In some operational scenarios, the device image display comprises an image output representing the second light modulation layer. The image output may comprise a plurality of pixel structures (or light switches) to generate the device display light (204). Each of the plurality of pixel structures may be individually or collectively controlled to generate a per-pixel device display light portion for each pixel in a plurality of pixels of the image output.

The device display image of the given spatial resolution as received in the image data by the computing device in the luminance channel (e.g., measuring brightness, etc.) may be used to generate a second light modulation image of the given spatial resolution. The first light modulation image may be up-sampled the given spatial resolution. The second light modulation image of the given spatial resolution may be generated based at least in part on differences between the up-sampled first light modulation image and the device display image in the luminance channel. The second light modulation in the luminance channel and the device display image in chrominance channels may be used to drive the plurality of pixel structures (or light switches) implemented in the second light modulation layer to render device display images.

Under some approaches, a device image display may generate non-zero light luminance caused by light leakage for a pixel even when a luminance value for the pixel indicated by the image data indicates a zero luminance.

In contrast, multiple light modulation layers as described herein can prevent light leakage. For the lowest luminance area, one or more light source elements designated to illuminate the area may be turned off, for example in the first light modulation layer of the light source.

Additionally, optionally or alternatively, energies or powers can be redirected or redistributed to cause light source elements designated to illuminate the highest luminance area to generate peak luminance values as appropriate as indicated in the image data.

As a result, an augmented entertainment system (configuration) as described herein can be capable of rendering images with a relatively high dynamic range and a relatively low darkest black level, thereby providing relatively high local and global contrasts in image rendering operations.

FIG. 3D illustrates an example light source element, which may be included in a modulated light source or non-modulated light source. In some operational scenarios, the light source element may generate light of modulated or unmodulated intensity.

The light generated or emitted from the light source element may be unpolarized, polarized, mix polarized, specific color, specific wavelength(s), etc. In an example, polarizing optical elements may be disposed in a light output are of the light source element to emit light of a specific polarization state as represented in a Poincare sphere. In another example, spectral selective optical elements such as light filters, dichroic coating layers, quantum dot layers, etc., may be disposed in a light output are of the light source element to emit light of a specific (e.g., narrow band, wide band, broadband, etc.) spectral distribution.

The light source element may be of one of a variety of spatial dimensions (e.g., a miniaturized spatial dimension, a microLED, an optical pump with graphene-on-silicon (GOS) waveguide modulator, a light source with grating coupler or prism coupler and silicon-on-insulator (SOI) waveguides, a light redirection element such as micromirror and/or gratings used to redirect incoming light, etc.). In some embodiments, a plurality of like light source elements may be arrayed in a spatial pattern (e.g., a grid, a rectangle, two grids offset from each other, etc.)

As illustrated, the light source element comprises a light engine such as an optical pump to inject (e.g., laser light, etc.) into a light waveguide that is optically coupled to the light engine, for example through a GOS layer. The injected light may be routed and directed to emit (e.g., collimated, diffused, with a specific solid angle, etc.) light 202 to illuminate (e.g., a designated area portion of, etc.) other layer(s) in a device image display.

### 10. EXAMPLE PROCESS FLOWS

FIG. 4 illustrates an example process flow according to an example embodiment of the present invention. In some example embodiments, one or more computing devices or components may perform this process flow. In block 402, an augmented entertainment system outputs, with a device image display device of a wearable or non-wearable computing device, display light rendering device display images.

In block 404, the augmented entertainment system provides or enables through an optical configuration of the computing device for a viewer of the computing device to view external display images rendered with external display light from an external image display and the device display images rendered with the device display light from the device image display.

The external display light is of a first light property, whereas the device display light is of a second light property different from the first light property.

In block 406, the augmented entertainment system combines, with a display light combiner implemented as a part of the optical configuration of the computing device, the external display light of the first light property and the device display light of the second light property to reach the viewer's vision field.

The display light combiner causes the optical configuration of the computing device to selectively reflect, based on the second light property, the device display light toward the viewer's vision field and to selectively transmit, based on the first light property, the external display light toward the viewer's vision field.

In various example embodiments, an apparatus, a system, an apparatus, or one or more other computing devices performs any or a part of the foregoing methods as described. In an embodiment, a non-transitory computer readable storage medium stores software instructions, which when executed by one or more processors cause performance of a method as described herein.

### 11. IMPLEMENTATION MECHANISMS - HARDWARE OVERVIEW

According to one embodiment, the techniques described herein are implemented by one or more special-purpose computing devices. The special-purpose computing devices may be hard-wired to perform the techniques, or may include digital electronic devices such as one or more application-specific integrated circuits (ASICs) or field programmable gate arrays (FPGAs) that are persistently programmed to perform the techniques, or may include one or more general purpose hardware processors programmed to perform the techniques pursuant to program instructions in firmware, memory, other storage, or a combination. Such special-purpose computing devices may also combine custom hard-wired logic, ASICs, or FPGAs with custom programming to accomplish the techniques. The special-purpose computing devices may be desktop computer systems, portable computer systems, handheld devices, networking devices or any other device that incorporates hard-wired and/or program logic to implement the techniques.

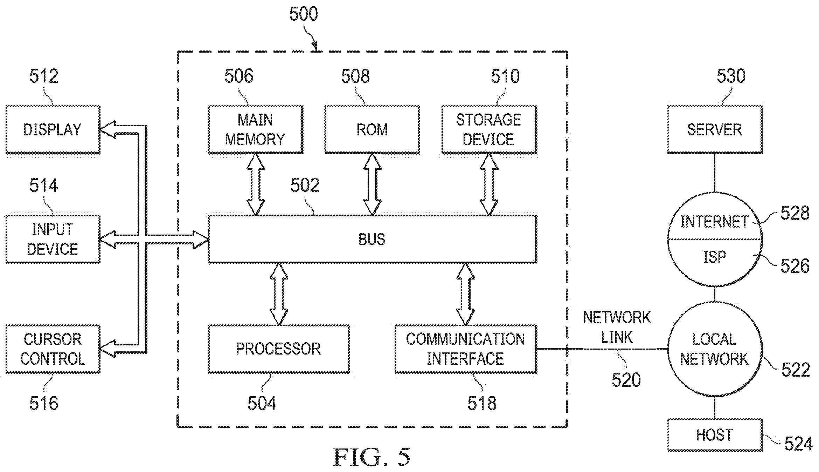

For example, FIG. 5 is a block diagram that illustrates a computer system 500 upon which an example embodiment of the invention may be implemented. Computer system 500 includes a bus 502 or other communication mechanism for communicating information, and a hardware processor 504 coupled with bus 502 for processing information. Hardware processor 504 may be, for example, a general purpose microprocessor.

Computer system 500 also includes a main memory 506, such as a random access memory (RAM) or other dynamic storage device, coupled to bus 502 for storing information and instructions to be executed by processor 504. Main memory 506 also may be used for storing temporary variables or other intermediate information during execution of instructions to be executed by processor 504. Such instructions, when stored in non-transitory storage media accessible to processor 504, render computer system 500 into a special-purpose machine that is customized to perform the operations specified in the instructions.

Computer system 500 further includes a read only memory (ROM) 508 or other static storage device coupled to bus 502 for storing static information and instructions for processor 504.

A storage device 510, such as a magnetic disk or optical disk, solid state RAM, is provided and coupled to bus 502 for storing information and instructions.

Computer system 500 may be coupled via bus 502 to a display 512, such as a liquid crystal display, for displaying information to a computer viewer. An input device 514, including alphanumeric and other keys, is coupled to bus 502 for communicating information and command selections to processor 504. Another type of viewer input device is cursor control 516, such as a mouse, a trackball, or cursor direction keys for communicating direction information and command selections to processor 504 and for controlling cursor movement on display 512. This input device typically has two degrees of freedom in two axes, a first axis (e.g., x) and a second axis (e.g., y), that allows the device to specify positions in a plane.

Computer system 500 may implement the techniques described herein using customized hard-wired logic, one or more ASICs or FPGAs, firmware and/or program logic which in combination with the computer system causes or programs computer system 500 to be a special-purpose machine. According to one embodiment, the techniques herein are performed by computer system 500 in response to processor 504 executing one or more sequences of one or more instructions contained in main memory 506. Such instructions may be read into main memory 506 from another storage medium, such as storage device 510. Execution of the sequences of instructions contained in main memory 506 causes processor 504 to perform the process steps described herein. In alternative embodiments, hard-wired circuitry may be used in place of or in combination with software instructions.

The term "storage media" as used herein refers to any non-transitory media that store data and/or instructions that cause a machine to operation in a specific fashion. Such storage media may comprise non-volatile media and/or volatile media. Non-volatile media includes, for example, optical or magnetic disks, such as storage device 510. Volatile media includes dynamic memory, such as main memory 506. Common forms of storage media include, for example, a floppy disk, a flexible disk, hard disk, solid state drive, magnetic tape, or any other magnetic data storage medium, a CD-ROM, any other optical data storage medium, any physical medium with patterns of holes, a RAM, a PROM, and EPROM, a FLASH-EPROM, NVRAM, any other memory chip or cartridge.

Storage media is distinct from but may be used in conjunction with transmission media. Transmission media participates in transferring information between storage media. For example, transmission media includes coaxial cables, copper wire and fiber optics, including the wires that comprise bus 502. Transmission media can also take the form of acoustic or light waves, such as those generated during radio-wave and infra-red data communications.

Various forms of media may be involved in carrying one or more sequences of one or more instructions to processor 504 for execution. For example, the instructions may initially be carried on a magnetic disk or solid state drive of a remote computer. The remote computer can load the instructions into its dynamic memory and send the instructions over a telephone line using a modem. A modem local to computer system 500 can receive the data on the telephone line and use an infra-red transmitter to convert the data to an infra-red signal. An infra-red detector can receive the data carried in the infra-red signal and appropriate circuitry can place the data on bus 502. Bus 502 carries the data to main memory 506, from which processor 504 retrieves and executes the instructions. The instructions received by main memory 506 may optionally be stored on storage device 510 either before or after execution by processor 504.

Computer system 500 also includes a communication interface 518 coupled to bus 502. Communication interface 518 provides a two-way data communication coupling to a network link 520 that is connected to a local network 522. For example, communication interface 518 may be an integrated services digital network (ISDN) card, cable modem, satellite modem, or a modem to provide a data communication connection to a corresponding type of telephone line. As another example, communication interface 518 may be a local area network (LAN) card to provide a data communication connection to a compatible LAN. Wireless links may also be implemented. In any such implementation, communication interface 518 sends and receives electrical, electromagnetic or optical signals that carry digital data streams representing various types of information.

Network link 520 typically provides data communication through one or more networks to other data devices. For example, network link 520 may provide a connection through local network 522 to a host computer 524 or to data equipment operated by an Internet Service Provider (ISP) 526. ISP 526 in turn provides data communication services through the world wide packet data communication network now commonly referred to as the "Internet" 528. Local network 522 and Internet 528 both use electrical, electromagnetic or optical signals that carry digital data streams. The signals through the various networks and the signals on network link 520 and through communication interface 518, which carry the digital data to and from computer system 500, are example forms of transmission media.

Computer system 500 can send messages and receive data, including program code, through the network(s), network link 520 and communication interface 518. In the Internet example, a server 530 might transmit a requested code for an application program through Internet 528, ISP 526, local network 522 and communication interface 518.

The received code may be executed by processor 504 as it is received, and/or stored in storage device 510, or other non-volatile storage for later execution.

### 12. EQUIVALENTS, EXTENSIONS, ALTERNATIVES AND MISCELLANEOUS

In the foregoing specification, example embodiments of the invention have been described with reference to numerous specific details that may vary from implementation to implementation. Thus, the sole and exclusive indicator of what is the invention, and is intended by the applicants to be the invention, is the set of appended claims.

The specification and drawings are, accordingly, to be regarded in an illustrative rather than a restrictive sense.

## Claims

1. A system (300) comprising a computing device and an external image display (304), wherein the computer device comprises:
a device image display (316) that outputs device display light rendering device display images;
an optical configuration (302) for a viewer (312) of the computing device to view external display images rendered with external display light from the external image display (304) and the device display images rendered with the device display light from the device image display (316);
wherein the external display light is of a first light property;
wherein the device display light is of a second light property different from the first light property;
a display light combiner implemented as a part of the optical configuration to combine the external display light of the first light property and the device display light of the second light property to reach the viewer's vision field;
wherein the display light combiner causes the optical configuration (302) to selectively reflect, based on the second light property, the device display light toward the viewer's vision field and to selectively transmit, based on the first light property, the external display light toward the viewer's vision field;
wherein the device image display (316) comprises a light source, a light filter and an image output;
wherein the light filter is configured to filter incoming source light of the light source to generate outgoing filtered light in accordance with the second light property;
wherein the outgoing filtered light is further modulated by the image output into the device display light rendering device display images; and
wherein the external display light is of a first set of wavelengths in accordance with the first light property, the device display light is of a second set of wavelengths in accordance with the second light property, and the first set of wavelengths are non-overlapping or mutually exclusive with the second set of wavelengths.

2. The system (300) of Claim 1 , wherein the first light property is further represented by a first light polarization state in a Poincare sphere, wherein the second light property is further represented by a second light polarization state in the Poincare sphere, wherein the first light polarization state is different from the first light polarization state.

3. The system (300) of any of Claims 1 or 2, wherein the display light combiner comprises a polarization based beamsplitter that causes the optical configuration (302) to selectively reflect light of a specific polarization state with a relatively high reflection efficiency, wherein the device display light is of the specific polarization state in accordance with the second light property.

4. The system (300) of any of Claims 1-3, wherein the display light combiner comprises a polarization based beamsplitter that causes the optical configuration (302) to selectively transmit light of a specific polarization state with a relatively high transmission efficiency, wherein the external display light is of the specific polarization state in accordance with the first light property.

5. The system (300) of any of Claims 1-4, wherein the display light combiner comprises a polarization state converter that converts incoming light of a first polarization state into outgoing light of a second polarization state different from the first polarization state.

6. The system (300) of any of Claims 1-5, wherein the display light combiner comprises a combination of a dichroic coating layer and a polarization based beamsplitter, wherein the combination of the dichroic coating layer and the polarization based beamsplitter causes the optical configuration (302) to selectively reflect light of a specific spectral and polarization combination of a specific spectral distribution and a specific polarization state with a relatively high reflection efficiency, wherein the device display light is of the specific spectral and polarization combination in accordance with the first light property.

7. The system (300) of any of Claims 1-6, wherein the computing device further comprises a beamsplitter that reflects the device display light to the optical configuration (302).

8. The system (300) of any of Claims 1-7, wherein the device display images comprise a right view device display image visible only to the viewer's right view vision field and a left view device display image visible only to the viewer's left view vision field.

9. The system (300) of any of Claims 1-8, wherein the external display images comprise a right view external display image visible only to the viewer's right view vision field and a left view external display image visible only to the viewer's left view vision field.

10. The system (300) of any of Claims 1-9, wherein the external display images are visible to a first vision field of the viewer's left and right view vision fields but are not visible to a second different vision field of the viewer's left and right view vision fields.

11. The system (300) of any of Claims 1-10, wherein the device image display (316) comprises a plurality of light modulation layers, wherein the plurality of light modulation layers comprises a first light modulation layer representing a light source, wherein the first light modulation layer comprises a plurality of light source elements, wherein individual light output states of light source elements in the plurality light source elements are controlled based at least in part on down-sampled images generated from the device display images in a luminance channel.

12. A method, comprising:
outputting (402), with a device image display of a computing device, display light rendering device display images;
outputting, with an external image display, external display light rendering external display images;
providing (404) through an optical configuration of the computing device for a viewer of the computing device to view the external display images rendered with the external display light from the external image display and the device display images rendered with the device display light from the device image display;
wherein the external display light is of a first light property;
wherein the device display light is of a second light property different from the first light property;
combining (406), with a display light combiner implemented as a part of the optical configuration of the computing device, the external display light of the first light property and the device display light of the second light property to reach the viewer's vision field;
wherein the display light combiner causes the optical configuration of the computing device to selectively reflect, based on the second light property, the device display light toward the viewer's vision field and to selectively transmit, based on the first light property, the external display light toward the viewer's vision field;
wherein the device image display comprises a light source, a light filter and an image output;
wherein the light filter is configured to filter incoming source light of the light source to generate outgoing filtered light in accordance with the second light property;
wherein the outgoing filtered light is further modulated by the image output into the device display light rendering device display images; and
wherein the external display light is of a first set of wavelengths in accordance with the first light property, the device display light is of a second set of wavelengths in accordance with the second light property, and the first set of wavelengths are non-overlapping or mutually exclusive with the second set of wavelengths.

13. A non-transitory computer readable storage medium, storing software instructions, which when executed by the system of Claim 1 cause performance of the method of Claim 12.

## Patentansprüche

1. System (300), das eine Rechenvorrichtung und eine externe Bildanzeigevorrichtung (304) umfasst,
wobei die Rechenvorrichtung Folgendes umfasst:
eine vorrichtungsseitige Bildanzeigevorrichtung (316), die vorrichtungsseitiges Bildanzeigelicht ausgibt, das vorrichtungsseitige Anzeigebilder rendert;
eine optische Konfiguration (302) für einen Betrachter (312) der Rechenvorrichtung zum Betrachten externer Anzeigebilder, die mit externem Anzeigelicht von der externen Bildanzeigevorrichtung (304) gerendert werden, und der vorrichtungsseitigen Anzeigebilder, die mit dem Vorrichtungsseitigen Anzeigelicht von der vorrichtungsseitigen Bildanzeigevorrichtung (316) gerendert werden;
wobei das externe Anzeigelicht eine erste Lichteigenschaft aufweist;
wobei das vorrichtungsseitige Anzeigelicht eine zweite Lichteigenschaft aufweist, die sich von der ersten Lichteigenschaft unterscheidet;
ein als Teil der optischen Konfiguration implementierter Anzeigelichtkombinator, der das externe Anzeigelicht der ersten Lichteigenschaft und das vorrichtungsseitige Anzeigelicht der zweiten Lichteigenschaft kombiniert, um das Sichtfeld des Betrachters zu erreichen;
wobei der Anzeigelichtkombinator bewirkt, dass die optische Konfiguration (302) das vorrichtungsseitige Anzeigelicht basierend auf der zweiten Lichteigenschaft selektiv in das Sichtfeld des Betrachters reflektiert und das externe Anzeigelicht basierend auf der ersten Lichteigenschaft selektiv durchlässt;
wobei die Bildanzeigevorrichtung (316) eine Lichtquelle, einen Lichtfilter und einen Bildausgang umfasst;
wobei der Lichtfilter so konfiguriert ist, dass er einfallendes Licht der Lichtquelle filtert, um gemäß der zweiten Lichteigenschaft ausgehendes gefiltertes Licht zu erzeugen;
wobei das ausgehende gefilterte Licht weiter durch den Bildausgang zu dem vorrichtungsseitigen Anzeigelicht moduliert wird, das vorrichtungsseitige Anzeigebilder rendert; und
wobei das externe Anzeigelicht ein erster Satz von Wellenlängen gemäß der ersten Lichteigenschaft ist, das vorrichtungsseitige Anzeigelicht ein zweiter Satz von Wellenlängen gemäß der zweiten Lichteigenschaft ist und sich der erste Satz von Wellenlängen und der zweite Satz von Wellenlängen nicht überlappen oder gegenseitig ausschließen.

2. System (300) nach Anspruch 1, wobei die erste Lichteigenschaft weiter durch einen ersten Lichtpolarisationszustand in einer Poincaré-Kugel dargestellt ist, wobei die zweite Lichteigenschaft weiter durch einen zweiten Lichtpolarisationszustand in der Poincaré-Kugel dargestellt ist, wobei sich der erste Lichtpolarisationszustand vom ersten Lichtpolarisationszustand unterscheidet.

3. System (300) nach einem der Ansprüche 1 oder 2, wobei der Anzeigelichtkombinator einen polarisationsbasierten Strahlteiler umfasst, der bewirkt, dass die optische Konfiguration (302) Licht eines bestimmten Polarisationszustands mit relativ hoher Reflexionseffizienz selektiv reflektiert, wobei das vorrichtungsseitige Anzeigelicht den bestimmten Polarisationszustand gemäß der zweiten Lichteigenschaft aufweist.

4. System (300) nach einem der Ansprüche 1-3, wobei der Anzeigelichtkombinator einen polarisationsbasierten Strahlteiler umfasst, der bewirkt, dass die optische Konfiguration (302) Licht eines bestimmten Polarisationszustands mit relativ hoher Transmissionseffizienz selektiv durchlässt, wobei das externe Anzeigelicht den bestimmten Polarisationszustand gemäß der ersten Lichteigenschaft aufweist.

5. System (300) nach einem der Ansprüche 1-4, wobei der Anzeigelichtkombinator einen Polarisationszustandswandler umfasst, der einfallendes Licht eines ersten Polarisationszustands in ausgehendes Licht eines zweiten Polarisationszustands umwandelt, der sich vom ersten Polarisationszustand unterscheidet.

6. System (300) nach einem der Ansprüche 1-5, wobei der Anzeigelichtkombinator eine Kombination aus einer dichroitischen Beschichtungsschicht und einem polarisationsbasierten Strahlteiler umfasst, wobei die Kombination aus der dichroitischen Beschichtungsschicht und dem polarisationsbasierten Strahlteiler bewirkt, dass die optische Konfiguration (302) Licht einer bestimmten spektralen und polarisationsbasierten Kombination mit einer bestimmten spektralen Verteilung und einem bestimmten Polarisationszustand mit relativ hoher Reflexionseffizienz selektiv reflektiert, wobei das vorrichtungsseitige Anzeigelicht die spezifische spektrale und polarisationsbasierte Kombination gemäß der ersten Lichteigenschaft aufweist.

7. System (300) nach einem der Ansprüche 1-6, wobei die Rechenvorrichtung weiter einen Strahlteiler umfasst, der das vorrichtungsseitige Anzeigelicht auf die optische Anordnung (302) reflektiert.

8. System (300) nach einem der Ansprüche 1-7, wobei die vorrichtungsseitigen Anzeigebilder ein vorrichtungsseitiges Anzeigebild für die rechte Ansicht, das nur im rechten Sichtfeld des Betrachters sichtbar ist, und ein vorrichtungsseitiges Anzeigebild für die linke Ansicht, das nur im linken Sichtfeld des Betrachters sichtbar ist, umfassen.

9. System (300) nach einem der Ansprüche 1-8, wobei die externen Anzeigebilder ein externes Anzeigebild für die rechte Ansicht, das nur im rechten Sichtfeld des Betrachters sichtbar ist, und ein externes Anzeigebild für die linke Ansicht, das nur im linken Sichtfeld des Betrachters sichtbar ist, umfassen.

10. System (300) nach einem der Ansprüche 1-9, wobei die externen Anzeigebilder in einem ersten Sichtfeld des linken und rechten Sichtfelds des Betrachters sichtbar sind, in einem zweiten, davon verschiedenen Sichtfeld des linken und rechten Sichtfelds des Betrachters jedoch nicht sichtbar sind.

11. System (300) nach einem der Ansprüche 1-10, wobei die vorrichtungsseitige Bildanzeigevorrichtung (316) eine Vielzahl von Lichtmodulationsschichten umfasst, wobei die Vielzahl von Lichtmodulationsschichten eine erste Lichtmodulationsschicht umfasst, die eine Lichtquelle darstellt, wobei die erste Lichtmodulationsschicht eine Vielzahl von Lichtquellenelementen umfasst, wobei einzelne Lichtausgangszustände der Lichtquellenelemente in der Vielzahl von Lichtquellenelementen zumindest teilweise basierend auf heruntergesampelten Bildern gesteuert werden, die aus den vorrichtungsseitigen Anzeigebildern in einem Luminanzkanal erzeugt werden.

12. Verfahren, umfassend
Ausgeben (402), mit einer vorrichtungsseitigen Bildanzeigevorrichtung einer Rechenvorrichtung von Anzeigelicht, das vorrichtungsseitige Anzeigebilder rendert;
Ausgeben mit einer externen Bildanzeigevorrichtung von externem Anzeigelicht, das externe Anzeigebilder rendert;
Vorsehen (404) durch eine optische Konfiguration der Rechenvorrichtung, das ein Betrachter der Rechenvorrichtung die externen Anzeigebilder, die mit dem externen Anzeigelicht von der externen Bildanzeigevorrichtung gerendert werden, und die vorrichtungsseitigen Anzeigebilder, die mit dem vorrichtungsseitigen Anzeigelicht von der vorrichtungsseitigen Bildanzeigevorrichtung gerendert werden, sieht;
wobei das externe Anzeigelicht eine erste Lichteigenschaft aufweist;
wobei das vorrichtungsseitige Anzeigelicht eine zweite Lichteigenschaft aufweist, die sich von der ersten Lichteigenschaft unterscheidet;
Kombinieren (406), mit einem als Teil der optischen Konfiguration der Rechenvorrichtung implementierten Anzeigelichtkombinator, des externen Anzeigelichts der ersten Lichteigenschaft und des vorrichtungsseitigen Anzeigelichts der zweiten Lichteigenschaft, um das Sichtfeld des Betrachters zu erreichen;
wobei der Anzeigelichtkombinator bewirkt, dass die optische Konfiguration der Rechenvorrichtung das vorrichtungsseitige Anzeigelicht basierend auf der zweiten Lichteigenschaft in Richtung des Sichtfelds des Betrachters selektiv reflektiert und das externe Anzeigelicht basierend auf der ersten Lichteigenschaft in Richtung des Sichtfelds des Betrachters selektiv durchlässt;
wobei die Bildanzeigevorrichtung eine Lichtquelle, einen Lichtfilter und einen Bildausgang umfasst;
wobei der Lichtfilter so konfiguriert ist, dass er einfallendes Licht der Lichtquelle filtert, um gemäß der zweiten Lichteigenschaft ausgehendes gefiltertes Licht zu erzeugen;
wobei das ausgehende gefilterte Licht weiter durch den Bildausgang zu dem vorrichtungsseitigen Anzeigelicht moduliert wird, das vorrichtungsseitige Anzeigebilder rendert; und
wobei das externe Anzeigelicht ein erster Satz von Wellenlängen gemäß der ersten Lichteigenschaft ist, das vorrichtungsseitige Anzeigelicht ein zweiter Satz von Wellenlängen gemäß der zweiten Lichteigenschaft ist und sich der erste Satz von Wellenlängen und der zweite Satz von Wellenlängen nicht überlappen oder gegenseitig ausschließen.

13. Nichtflüchtiges, computerlesbares Speichermedium, das Softwareanweisungen speichert, die, wenn sie von dem System nach Anspruch 1 ausgeführt werden, Durchführung des Verfahrens nach Anspruch 12 bewirken.

## Revendications

1. Système (300) comprenant un dispositif informatique et un affichage d'image externe (304),
dans lequel le dispositif informatique comprend :
un affichage d'image de dispositif (316) qui produit des images d'affichage de dispositif de rendu de lumière d'affichage de dispositif ;
une configuration optique (302) pour un spectateur (312) du dispositif informatique pour visualiser des images d'affichage externes rendues avec la lumière d'affichage externe de l'affichage d'image externe (304) et les images d'affichage de dispositif rendues avec la lumière d'affichage de dispositif de l'affichage d'image de dispositif (316) ;
dans lequel la lumière d'affichage externe est d'une première propriété de lumière ;
dans lequel la lumière d'affichage de dispositif est d'une seconde propriété de lumière différente de la première propriété de lumière ;
un combinateur de lumière d'affichage mis en œuvre dans le cadre de la configuration optique pour combiner la lumière d'affichage externe de la première propriété de lumière et la lumière d'affichage de dispositif de la seconde propriété de lumière pour atteindre le champ de vision du spectateur ;
dans lequel le combinateur de lumière d'affichage amène la configuration optique (302) à réfléchir de manière sélective, sur la base de la seconde propriété de lumière, la lumière d'affichage de dispositif vers le champ de vision du spectateur et transmettre de manière sélectivement, sur la base de la première propriété de lumière, la lumière d'affichage externe vers le champ de vision du spectateur ;
dans lequel l'affichage d'image de dispositif (316) comprend une source de lumière, un filtre de lumière et une sortie d'image ;
dans lequel le filtre de lumière est configuré pour filtrer la lumière de source entrante de la source de lumière pour générer une lumière filtrée sortante selon la seconde propriété de lumière ;
dans lequel la lumière filtrée sortante est modulée en outre par la sortie d'image dans les images d'affichage de dispositif de rendu de lumière d'affichage de dispositif; et
dans lequel la lumière d'affichage externe est d'un premier ensemble de longueurs d'onde selon la première propriété de lumière, la lumière d'affichage de dispositif est d'un second ensemble de longueurs d'onde selon la seconde propriété de lumière, et le premier ensemble de longueurs d'onde ne se chevauche pas ou n'est pas mutuellement exclusif avec le second ensemble de longueurs d'onde.

2. Système (300) selon la revendication 1, dans lequel la première propriété de lumière est en outre représentée par un premier état de polarisation de la lumière dans une sphère de Poincaré, dans lequel la seconde propriété de lumière est en outre représentée par un second état de polarisation de la lumière dans la sphère de Poincaré, dans lequel le premier état de polarisation de la lumière est différent du premier état de polarisation de la lumière.

3. Système (300) selon l'une quelconque des revendications 1 ou 2, dans lequel le combinateur de lumière d'affichage comprend un séparateur de faisceau basé sur la polarisation qui amène la configuration optique (302) à réfléchir de manière sélective la lumière d'un état de polarisation spécifique avec une efficacité de réflexion relativement élevée, dans lequel la lumière d'affichage de dispositif est de l'état de polarisation spécifique selon la seconde propriété de lumière.

4. Système (300) selon l'une quelconque des revendications 1-3, dans lequel le combinateur de lumière d'affichage comprend un séparateur de faisceau basé sur la polarisation qui amène la configuration optique (302) à transmettre de manière sélective la lumière d'un état de polarisation spécifique avec une efficacité de transmission relativement élevée, dans lequel la lumière d'affichage externe est de l'état de polarisation spécifique selon la première propriété de lumière.

5. Système (300) selon l'une quelconque des revendications 1-4, dans lequel le combinateur de lumière d'affichage comprend un convertisseur d'état de polarisation qui convertit la lumière entrante d'un premier état de polarisation en lumière sortante d'un second état de polarisation différent du premier état de polarisation.

6. Système (300) selon l'une quelconque des revendications 1-5, dans lequel le combinateur de lumière d'affichage comprend une combinaison d'une couche de revêtement dichroïque et d'un séparateur de faisceau basé sur la polarisation, dans lequel la combinaison de la couche de revêtement dichroïque et du séparateur de faisceau basé sur la polarisation amène la configuration optique (302) à réfléchir de manière sélective la lumière d'une combinaison spectrale et de polarisation spécifique d'une distribution spectrale spécifique et d'un état de polarisation spécifique avec une efficacité de réflexion relativement élevée, dans lequel la lumière d'affichage de dispositif est de la combinaison spectrale et de polarisation spécifique selon la première propriété de lumière.

7. Système (300) selon l'une quelconque des revendications 1-6, dans lequel le dispositif informatique comprend en outre un séparateur de faisceau qui réfléchit la lumière d'affichage de dispositif vers la configuration optique (302).

8. Système (300) selon l'une quelconque des revendications 1-7, dans lequel les images d'affichage de dispositif comprennent une image d'affichage de dispositif de vue droite visible uniquement dans le champ de vision droit du spectateur et une image d'affichage de dispositif de vue gauche visible uniquement dans le champ de vision gauche du spectateur.

9. Système (300) selon l'une quelconque des revendications 1-8, dans lequel les images d'affichage externes comprennent une image d'affichage externe de vue droite visible uniquement dans le champ de vision droit du spectateur et une image d'affichage externe de vue gauche visible uniquement dans le champ de vision gauche du spectateur.

10. Système (300) selon l'une quelconque des revendications 1-9, dans lequel les images d'affichage externes sont visibles dans un premier champ de vision des champs de vision gauche et droit du spectateur, mais ne sont pas visibles dans un second champ de vision différent des champs de vision gauche et droit du spectateur.

11. Système (300) selon l'une quelconque des revendications 1-10, dans lequel l'affichage d'image de dispositif (316) comprend une pluralité de couches de modulation de lumière, dans lequel la pluralité de couches de modulation de lumière comprend une première couche de modulation de lumière représentant une source de lumière, dans lequel la première couche de modulation de lumière comprend une pluralité d'éléments de source de lumière, dans lequel des états de sortie de lumière individuels des éléments de source de lumière dans la pluralité d'éléments de source de lumière sont commandés sur la base au moins en partie d'images sous-échantillonnées générées à partir des images d'affichage de dispositif dans un canal de luminance.

12. Procédé comprenant :
la sortie (402), avec un affichage d'image de dispositif d'un dispositif informatique, d'images d'affichage de dispositif de rendu de lumière d'affichage ;
la sortie, avec un affichage d'image externe, d'images d'affichage externes de rendu de lumière d'affichage externe ;
la fourniture (404) au moyen d'une configuration optique du dispositif informatique pour qu'un utilisateur du dispositif informatique visualise les images d'affichage externes rendues avec la lumière d'affichage externe de l'affichage d'image externe et les images d'affichage de dispositif rendues avec la lumière d'affichage de dispositif de l'affichage d'image de dispositif ;
dans lequel l'éclairage d'affichage externe est d'une première propriété de lumière ;
dans lequel la lumière d'affichage de dispositif est d'une seconde propriété de lumière différente de la première propriété de lumière ;
la combinaison (406), avec un combinateur de lumière d'affichage implémenté dans le cadre de la configuration optique du dispositif informatique, de la lumière d'affichage externe de la première propriété de lumière et de la lumière d'affichage de dispositif de la seconde propriété de lumière pour atteindre le champ de vision du spectateur ;
dans lequel le combinateur de lumière d'affichage amène la configuration optique du dispositif informatique à réfléchir de manière sélective, sur la base de la seconde propriété de lumière, la lumière d'affichage de dispositif vers le champ de vision du spectateur et transmettre de manière sélective, sur la base de la première propriété de lumière, la lumière d'affichage externe vers le champ de vision du spectateur ;
dans lequel l'affichage d'image de dispositif comprend une source de lumière, un filtre de lumière et une sortie d'image ;
dans lequel le filtre de lumière est configuré pour filtrer la lumière de source entrante de la source de lumière pour générer une lumière filtrée sortante selon la seconde propriété de lumière ;
dans lequel la lumière filtrée sortante est en outre modulée par la sortie d'image dans les images d'affichage de dispositif de rendu de lumière d'affichage de dispositif; et
dans lequel la lumière d'affichage externe est d'un premier ensemble de longueurs d'onde selon la première propriété de lumière, la lumière d'affichage de dispositif est d'un second ensemble de longueurs d'onde selon la seconde propriété de lumière, et le premier ensemble de longueurs d'onde ne se chevauche pas ou n'est pas mutuellement exclusif avec le second ensemble de longueurs d'onde.

13. Support de stockage non transitoire lisible par ordinateur, stockant des instructions logicielles qui, lorsqu'elles sont exécutées par le système selon la revendication 1, provoquent la performance du procédé selon la revendication 12.
